# EUROPEAN PATENT APPLICATION

(11) **EP 4 693 776 A1**
(43) Date of publication of application: **11.02.2026**
(21) Application number: 25194410.4
(22) Date of filing: 06.08.2025
(51) Int. Cl.: H02B 13/025, H02B 1/20, H01H 9/34, H01H 71/02

(54) **POWER CABINET**

(30) Priority: 06.08.2024 CN 202411081681
(71) Applicant: Huawei Digital Power Technologies Co., Ltd., Shenzhen, Guangdong 518043 (CN)
(72) Inventor: ZHOU, Xudong, Shenzhen, 518043 (CN); SUN, Jisheng, Shenzhen, 518043 (CN); GUI, Xin, Shenzhen, 518043 (CN); ZHAO, Fugao, Shenzhen, 518043 (CN); ZHANG, Xiufeng, Shenzhen, 518043 (CN); DONG, Ya, Shenzhen, 518043 (CN)
(74) Representative: Gill Jennings & Every LLP

(57) **Abstract**

Embodiments of this application provide a power cabinet (100), and relate to the field of power supply technologies. The power cabinet (100) includes a cabinet body (1), a circuit breaker (2), and a plurality of busbars (5). A plurality of first busbars (5) are fastened in the cabinet body (1). The circuit breaker (2) is mounted in the cabinet body (1) and electrically connected to the plurality of busbars (5). The circuit breaker (2) has at least one are spray vent (20) facing the plurality of busbars (5). The power cabinet (1) further includes at least one pipe (6). The pipe (6) is fastened in the cabinet body (1). The pipe (6) is located on a side that is of the circuit breaker (2) and that faces the plurality of busbars (5). The pipe (6) communicates with the spray opening (20). By using the foregoing technical solutions, gas sprayed from the circuit breaker (2) can be guided and constrained, so that the power cabinet (100) runs more stably.

## Description

### TECHNICAL FIELD

This application relates to the field of power supply technologies, and in particular, to a power cabinet.

### BACKGROUND

With development of digitalization, networking, and intelligence, requirements for computing power increase rapidly. As a key to computing power support, a data center develops toward a high capacity, a high density, and the like. A power cabinet, for example, an uninterruptible power supply (Uninterruptible Power Supply, UPS), is an indispensable device in the data center, and running stability of the power cabinet is particularly important.

In a conventional technology, a circuit breaker is disposed in the power cabinet. When the circuit breaker performs breaking, high-voltage charged gas is sprayed from an arc spray vent. The gas is attached to a busbar, causing the busbar to be ablated or blackened. This also affects other components and devices around the circuit breaker, and affects running stability of the power cabinet.

### SUMMARY

This application provides a power cabinet, to guide and constrain gas sprayed from a circuit breaker, so that the power cabinet runs more stably.

To achieve the foregoing objective, the following technical solutions are used in this application.

This application provides a power cabinet. The power cabinet includes a cabinet body, a circuit breaker, and a plurality of busbars. The plurality of busbars are fastened in the cabinet body. The circuit breaker is mounted in the cabinet body and electrically connected to the plurality of busbars. The circuit breaker has at least one arc spray vent facing the plurality of busbars. The power cabinet further includes at least one pipe. The pipe is fastened in the cabinet body. The pipe is located on a side that is of the circuit breaker and that faces the plurality of busbars. The pipe communicates with the arc spray vent.

The plurality of busbars may include an input busbar and an output busbar, and the plurality of busbars may be electrically connected to the circuit breaker by being connected to a connection terminal on the circuit breaker. After the circuit breaker breaks the plurality of busbars (for example, by using a movable contact and a static contact), high-voltage charged gas is sprayed from the arc spray vent of the circuit breaker. Because the pipe communicates with the arc spray vent, the gas sprayed from the arc spray vent enters the pipe and does not spread around after being sprayed from the arc spray vent. The pipe has specific constraint effect on gas sprayed from the circuit breaker. This reduces a possibility that a component around the circuit breaker is affected by gas sprayed from the circuit breaker. The pipe also provides space for cooling and deposition of gas sprayed from the circuit breaker. In a process of passing through the pipe, some impurities in the gas are deposited in the pipe, thereby reducing impact of the impurities on another component and another device in the cabinet body. The pipe further prolongs discharge time of gas, so that high-temperature gas is cooled to some extent in a process of passing through the pipe, thereby reducing a temperature present when the gas is discharged from the pipe. In addition, a shape of the pipe may be set according to a requirement, so that gas sprayed from the arc spray vent can be guided to a better discharge position through the pipe. For example, an air discharge end of the pipe is away from the plurality of busbars. This reduces a possibility that gas sprayed from the circuit breaker is attached to the plurality of busbars, reduces a possibility that a first busbar is ablated or blackened, and makes the power cabinet run more stably.

In an optional implementation, the plurality of busbars are located on a side that is of the circuit breaker and that faces a backplane of the cabinet body, and the pipe and the arc spray vent that communicate with each other are located between two busbars that are in the plurality of busbars and that are distributed in a width direction of the cabinet body.

Because the arc spray vent is located between the two busbars, when the circuit breaker breaks the busbars on two sides of the arc spray vent, gas sprayed from the arc spray vent has great impact on the two busbars. Through disposition of the pipe between the two busbars, a possibility that gas sprayed from the circuit breaker is attached to the busbars on the two sides can be reduced, and a possibility that the busbar is ablated or blackened is reduced, so that the power cabinet runs more stably.

In an optional implementation, the cabinet body has a through hole, and the pipe extends out of the cabinet body through the through hole.

Gas sprayed from the circuit breaker through the arc spray vent may be discharged to the outside of the cabinet body through the pipe. The gas does not directly enter the cabinet body and be attached to the busbar. This further reduces a possibility that high-temperature charged gas causes the busbar to be blackened or ablated, and does not affect an environment in the cabinet body. In addition, impurities deposited in the pipe are also sprayed out of the cabinet body through the pipe, thereby further reducing a possibility that the impurities affect another component or another device in the cabinet body.

In an optional implementation, the through hole is located on the backplane of the cabinet body, and the pipe extends in a thickness direction of the cabinet body and extends out from the through hole.

The pipe extends in the thickness direction of the cabinet body, and the pipe extends out of the back of the cabinet body, thereby reducing a possibility that dust falls into the pipe from a discharge outlet of the pipe.

In an optional implementation, the through hole is located at the top of the cabinet body, the pipe is bent and includes a part extending in a thickness direction of the cabinet body and a part extending in a height direction of the cabinet body, the part that is of the pipe and that extends in the thickness direction of the cabinet body communicates with the arc spray vent, and the part that is of the pipe and that extends in the height direction of the cabinet body extends to above the cabinet body from the through hole.

In a scenario in which power cabinets are combined, the through hole is provided at the top of the cabinet body, so that gas sprayed from the circuit breaker is discharged from the top of the cabinet body under guidance of the pipe, thereby reducing impact of discharged gas on another power cabinet.

In an optional implementation, the power cabinet further includes a collector with an accommodation cavity, one end of the pipe communicates with the arc spray vent, and the other end communicates with the accommodation cavity of the collector.

Through disposition of the collector, a possibility that gas discharged by the circuit breaker is directly discharged outside the cabinet body or inside the cabinet body may be reduced. In addition, the collector may also be filled with at least one of an asbestos material (for example, an asbestos mesh), foam copper, or a steel wire mesh, to absorb and filter impurities entering the collector.

In an optional implementation, one of the pipe and the circuit breaker has a protruding rib, the other has a groove fitting with the protruding rib, and the protruding rib is inserted into the groove.

The circuit breaker may be mounted in the cabinet body in an insertion manner. When the circuit breaker is inserted, the protruding rib may be inserted into the groove that fits with the circuit breaker, to reduce a possibility of misplacement between the arc spray vent and the pipe, and enable gas sprayed from the arc spray vent to enter the pipe more accurately. In addition, when the protruding rib cannot be inserted into the groove, insertion of the circuit breaker cannot be completed. This can also remind an installation engineer to adjust a mounting position and a mounting angle of the circuit breaker as soon as possible, to assist in completing mounting of the circuit breaker as soon as possible.

In an optional implementation, the protruding rib is an annular protruding rib, the groove is an annular groove, and both the protruding rib and the groove surround the arc spray vent.

The protruding rib is inserted into the groove, and the protruding rib and the groove are disposed around the arc spray vent. In this way, an annular sealing structure is formed at a communication position between the arc spray vent and the pipe, to reduce a possibility that gas sprayed from the circuit breaker leaks from the communication position between the arc spray vent and the pipe, and enable more gas to flow along the pipe, thereby better controlling and guiding the gas sprayed from the circuit breaker.

In an optional implementation, the power cabinet further includes a filter screen with a plurality of air holes, the filter screen is fastened in the pipe, and the filter screen is configured to filter gas flowing through the pipe.

When gas discharged by the circuit breaker passes through the pipe, the filter screen can filter the gas in the pipe, to filter out large particles of impurities, and more impurities are deposited in the pipe, thereby reducing a possibility that impurities enter the cabinet body and affect another device and another component. This reduces a failure rate of the power cabinet and makes the power cabinet run more stably. In addition, the filter screen may also interrupt a flame. When gas sprayed from the arc spray vent contains a flame, the filter screen can extinguish the flame.

In an optional implementation, the filter screen is magnetic; or the filter screen is a gas-generating sheet, and the filter screen is configured to be heated to generate hydrogen gas.

In a case in which the filter screen is magnetic, the filter screen can filter gas, and can also absorb metal impurities, so that small particles of metal impurities are also blocked on the filter screen, thereby further improving a filtering capability of the filter screen. In a case in which the filter screen is the gas-generating sheet, after gas sprayed from the arc spray vent enters the pipe, an ambient temperature of the filter screen increases, the filter screen is heated to generate hydrogen gas, and the hydrogen gas has good heat conductivity and performs a function of cooling an electric arc. In addition, the hydrogen gas also reacts with oxygen in the pipe, and generates water under heating of the sprayed gas (or a flame), to perform cooling and extinguish the flame.

In an optional implementation, the power cabinet further includes a mounting plate, the mounting plate is fastened in the cabinet body, the mounting plate and the circuit breaker are arranged in the thickness direction of the cabinet body, the arc spray vent of the circuit breaker faces the mounting plate, the pipe is fastened on the mounting plate, the circuit breaker further has a plurality of sockets facing the mounting plate, and the plurality of busbars all pass through the mounting plate and are respectively inserted into the corresponding sockets.

The circuit breaker may be mounted in the cabinet body in an insertion manner. In a process of inserting the circuit breaker, the arc spray vent of the circuit breaker communicates with the pipe in a fitting manner. In addition, the plurality of busbars in the cabinet body are also inserted into the sockets of the circuit breaker, to implement an electrical connection to the circuit breaker. The mounting plate can fasten the pipe, and can also limit the busbar, thereby reducing a possibility that the busbar shakes randomly, and facilitating mounting of the pipe.

In an optional implementation, the plurality of busbars are fastened on the mounting plate.

The plurality of busbars are fastened on the mounting plate. In a process of inserting the circuit breaker, an insertion hole corresponding to the circuit breaker and each busbar are not easily misplaced. This also reduces a possibility of bending or damaging the plurality of busbars in a process of mounting the circuit breaker, and facilitates quick mounting of the circuit breaker.

In an optional implementation, a ratio of a maximum dimension of the mounting plate in the width direction of the cabinet body to a maximum dimension of the circuit breaker in the width direction of the cabinet body is not greater than 1.2.

The power cabinet may continuously develop toward miniaturization under leadership of a trend of capacity upgrade and a high density. A width of the cabinet body greatly affects an area occupied by the power cabinet, especially in a scenario in which a plurality of power cabinets are spliced. A plurality of circuit breakers are usually disposed in the power cabinet, and a width of the mounting plate is controlled within a specific range, so that the mounting plate is not excessively wide. For example, the width of the mounting plate is close to a width of the circuit breaker. In a case in which the plurality of circuit breakers are all equipped with mounting plates, the mounting plate does not affect compact mounting of the circuit breaker, and an overall width present after the plurality of circuit breakers are combined is reduced, thereby reducing a dimension of the cabinet body in the width direction.

In an optional implementation, the circuit breaker is a multiphase circuit breaker and is configured to break multiphase electricity, the circuit breaker has a plurality of arc spray vents, gas generated when the circuit breaker breaks currents of different phases is sprayed from the corresponding arc spray vents, a plurality of pipes are provided and fastened on the mounting plate, and each pipe correspondingly communicates with one arc spray vent.

In a case in which the circuit breaker is the multiphase circuit breaker, the circuit breaker needs to break busbars of a plurality of phases simultaneously or separately. For example, a movable contact in the circuit breaker is configured to break two first busbars, and another movable contact is configured to break two second busbars. In a process in which the circuit breaker breaks the two first busbars, gas generated during breaking is sprayed from one arc spray vent and then enters a corresponding pipe. In a process in which the circuit breaker breaks the two second busbars, gas generated during breaking is sprayed from another arc spray vent and then enters a corresponding pipe. The plurality of pipes are fastened on the mounting plate, and the plurality of busbars also pass through the mounting plate, so that integration between structures is higher. The mounting plate only needs to be mounted in the cabinet body, to mount the plurality of pipes and limit the plurality of busbars.

In an optional implementation, the power cabinet further includes a plurality of spacers, the plurality of spacers are fastened on a plate surface of the mounting plate, and a material of the mounting plate and a material of the spacer are both insulation materials. The plurality of busbars include two first busbars arranged in the width direction of the cabinet body and two second busbars arranged in the width direction of the cabinet body, the plurality of arc spray vents include a first arc spray vent and a second arc spray vent that are arranged in the height direction of the cabinet body, the first arc spray vent is located between the two first busbars, the second arc spray vent is located between the two second busbars, and at least one spacer is disposed between the first busbar and the second busbar that are adjacent in the height direction of the cabinet body.

The spacer is disposed between the first busbar and the second busbar that are adjacent, so that the spacer is used as an inter-phase separation structure on the mounting plate, a creepage distance between the first busbar and the second busbar is increased, insulation between adjacent busbars is improved, and the power cabinet runs more stably.

In an optional implementation, the power cabinet further includes a dividing bar, the dividing bar is fastened on a side that is of the circuit breaker and that faces the mounting plate, and protrudes outward, the dividing bar is located between the first arc spray vent and the second arc spray vent, the dividing bar extends in the width direction of the cabinet body, the two first busbars are located on a side that is of the dividing bar and that faces the first arc spray vent, and the two second busbars are located on a side that is of the dividing bar and that faces the second arc spray vent.

As an inter-phase separation structure on the circuit breaker, in a case in which the circuit breaker is electrically connected to the two first busbars and the two second busbars, the dividing bar increases a creepage distance between a position at which the circuit breaker is connected to the first busbar and a position at which the circuit breaker is connected to the second busbar, thereby improving insulation between adjacent busbars, and making the power cabinet run more stably.

In an optional implementation, the circuit breaker has a mounting groove, a part of the dividing bar is located in the mounting groove, the other part protrudes out of the mounting groove, and the mounting groove limits movement of the dividing bar toward the mounting plate. At least one of two side walls that are of the circuit breaker and that are arranged in an extension direction of the mounting groove has a plug-in port, the plug-in port communicates with the mounting groove, and the plug-in port is used for inserting the dividing bar into the mounting groove or removing the dividing bar from the mounting groove.

When the dividing bar needs to be mounted and fastened, the dividing bar is inserted into the mounting groove from the plug-in port on the side wall of the circuit breaker, and the dividing bar slides in the extension direction of the mounting groove, so that the dividing bar may be mounted in the mounting groove. After the dividing bar is mounted, the mounting groove can limit moving of the dividing bar toward the mounting plate, thereby reducing a possibility of detaching of the dividing bar from the mounting groove, and implementing mounting and fastening of the dividing bar on the circuit breaker. When the dividing bar is removed, the dividing bar may also be removed from the plug-in port.

In an optional implementation, the part that is of the dividing bar and that is located outside the mounting groove includes a protruding plate and an abutting plate. The protruding plate protrudes toward the mounting plate, the abutting plate is fastened to a side that is of the protruding plate and that faces the first arc spray vent or the second arc spray vent, and the abutting plate is configured to abut against the circuit breaker.

In a case in which the dividing bar is mounted in the mounting groove, the protruding plate located outside the mounting groove mainly increases an inter-phase creepage distance. In addition, the abutting plate can increase the creepage distance to some extent, and can also limit swing of the dividing bar by abutting against the circuit breaker, to improve stability of the dividing bar present after mounting.

In an optional implementation, the power cabinet further includes at least one terminal group for signal transmission, each terminal group includes two signal terminals for insertion fitting, one of the two signal terminals in each terminal group is fastened on the mounting plate, and the other is fastened on the circuit breaker.

After the circuit breaker is inserted into the cabinet body, the signal terminal on the circuit breaker fits with the signal terminal on the mounting plate in an insertion manner, to complete a connection between the two signal terminals, thereby facilitating signal transmission between the cabinet body and the circuit breaker. The mounting plate provides a mounting position for the signal terminal in the cabinet body, so that the signal terminal is integrated on the mounting plate. This facilitates connection and fastening of components in the cabinet body.

In an optional implementation, the power cabinet further includes a mounting base, the mounting base is fastened in the cabinet body, the mounting base has a mounting cavity and a mounting opening for the circuit breaker to enter the mounting cavity, a wall surface that is of the mounting base and that encloses the mounting cavity has a sliding groove, an end of the sliding groove extends to the mounting opening, a slider is disposed on the circuit breaker, the slider is located in the sliding groove, and the sliding groove is used for sliding of the slider.

When the circuit breaker needs to be inserted into the power cabinet, the circuit breaker may be inserted into the mounting cavity from the mounting opening, the slider on the circuit breaker is in sliding fitting with the sliding groove on the mounting base, and the sliding groove limits and guides the slider, that is, guides an insertion direction and a mounting path of the circuit breaker, to implement accurate insertion between the circuit breaker and the mounting base.

### BRIEF DESCRIPTION OF DRAWINGS

FIG. 1 is a diagram of an overall structure of a power cabinet according to an embodiment of this application;
FIG. 2 is a simple circuit schematic of a mounting position of a circuit breaker according to an embodiment of this application;
FIG. 3 is a diagram of a mounting manner of a circuit breaker according to an embodiment of this application;
FIG. 4 is a diagram of an overall structure of a mounting base according to an embodiment of this application;
FIG. 5 is a diagram of fitting between a slider and a sliding groove according to an embodiment of this application;
FIG. 6 is a diagram of an overall structure of a handle according to an embodiment of this application;
FIG. 7 is a diagram of a partial structure of a circuit breaker present after mounting according to an embodiment of this application;
FIG. 8 is a diagram of a structure of the circuit breaker in FIG. 7;
FIG. 9 is an exploded view of the structure in FIG. 7;
FIG. 10 is a diagram of a structure of a mounting groove according to an embodiment of this application;
FIG. 11 is an enlarged view of a part A in FIG. 10;
FIG. 12 is a diagram of the structure in FIG. 7 from an angle of view;
FIG. 13 is a cross-sectional view along A-A in FIG. 12;
FIG. 14 is an enlarged view of a part B in FIG. 13;
FIG. 15 is a diagram of a partial structure of another circuit breaker present after mounting according to an embodiment of this application;
FIG. 16 is a diagram of a structure of a spacer according to an embodiment of this application;
FIG. 17 is a side view of the structure in FIG. 16;
FIG. 18 is a diagram of dimensions of a circuit breaker and a mounting plate according to an embodiment of this application;
FIG. 19 is a diagram of a structure of a through hole according to an embodiment of this application;
FIG. 20 is a diagram of a structure of another through hole according to an embodiment of this application;
FIG. 21 is a diagram of a structure of a collector according to an embodiment of this application; and
FIG. 22 is a diagram of a structure of another power cabinet according to an embodiment of this application.

Reference numerals:
100: power cabinet; 1: cabinet body; 11: opening; 12: cabinet door; 13: through hole; 14: backplane; 2: circuit breaker; 20: are spray vent; 21: first arc spray vent; 22: second arc spray vent; 23: third arc spray vent; 24: slider; 25: socket; 26: mounting groove; 261: plug-in port; 27: groove; 3: power module; 4: mounting base; 41: mounting cavity; 42: mounting opening; 43: sliding groove; 44: support column; 5: busbar; 51: first busbar; 52: second busbar; 53: third busbar; 6: pipe; 601: first part; 602: second part; 61: first pipe; 62: second pipe; 63: third pipe; 64: mounting plate; 641: accommodating cavity; 65: spacer; 66: collector; 661: accommodation cavity; 67: protruding rib; 7: filter screen; 71: air hole; 8: dividing bar; 81: protruding plate; 82: abutting plate; 9: terminal group; 91: signal terminal; 200: bypass module; 300: handle; 301: first clamping slot; 302: second clamping slot.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

In this application, the terms "first", "second", and the like are merely intended for a purpose of description, and are intended to distinguish between one element and another element, but shall be understood as an indication or implication of relative importance or implicit indication of a quantity of indicated technical features. Therefore, a feature limited by "first", "second", or the like may explicitly or implicitly include one or more features.

In this application, unless otherwise clearly specified and limited, "a plurality of" means two or more.

In addition, in this application, the terms such as "example" or "for example" indicate giving an example, an illustration, or a description. Any embodiment or design scheme described as an "example" or "for example" in this application should not be construed as being more preferred or having more advantages than another embodiment or design scheme. Exactly, use of the terms such as "example" or "for example" is intended to present a related concept in a specific manner.

In the accompanying drawings of embodiments of this application, entity structures such as components and assemblies are indicated by using guide lines, and hollow structures such as openings, holes, space, and cavities are indicated by using guide lines with arrows.

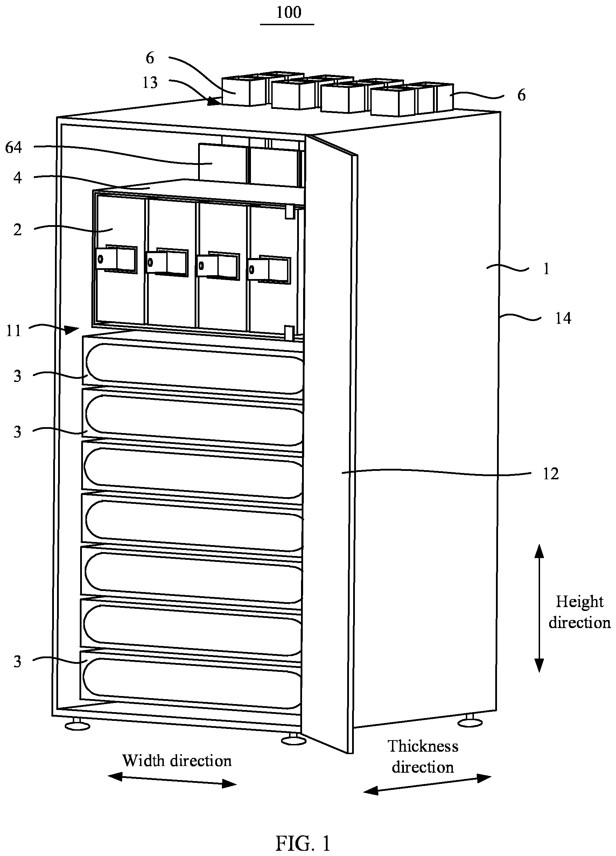

Embodiments of this application provide a power cabinet 100, for example, an uninterruptible power supply (Uninterruptible Power Supply, UPS). FIG. 1 shows an example of a structure of the power cabinet 100. The power cabinet 100 includes a cabinet body 1, a circuit breaker 2, and a plurality of power modules 3.

The cabinet body 1 may be any device cabinet that can be used for mounting a device and a component. A plurality of devices and components are mounted in internal space of the cabinet body 1. The cabinet body 1 further has an opening 11 communicating with the internal space. The cabinet body 1 is rotatably connected (for example, hinged) to a cabinet door 12 for opening or closing the opening 11. A cabinet plate that is of the cabinet body 1 and that faces away from the opening 11 (a cabinet plate at the rear of the cabinet body 1) is a backplane 14 of the cabinet body 1.

Refer to FIG. 1. The circuit breaker 2 is mounted in the cabinet body 1. For example, in the example shown in FIG. 1, a plurality of circuit breakers 2 may be disposed. The plurality of circuit breakers 2 may be distributed in a width direction of the cabinet body 1. The width direction of the cabinet body 1 is a horizontal direction in terms of facing the cabinet body 1 after the door of the cabinet body 1 is opened. In another example, the plurality of circuit breakers 2 may alternatively be distributed in a height direction of the cabinet body 1. In addition, the plurality of power modules 3 are mounted in the cabinet body 1. For example, in the example shown in FIG. 1, the plurality of power modules 3 are stacked in the height direction of the cabinet body 1. The plurality of power modules 3 may be connected in series, or the plurality of power modules 3 may be connected in parallel, or some of the plurality of power modules 3 may be connected in series and some of the plurality of power modules 3 may be connected in parallel. This is not specifically limited in this application.

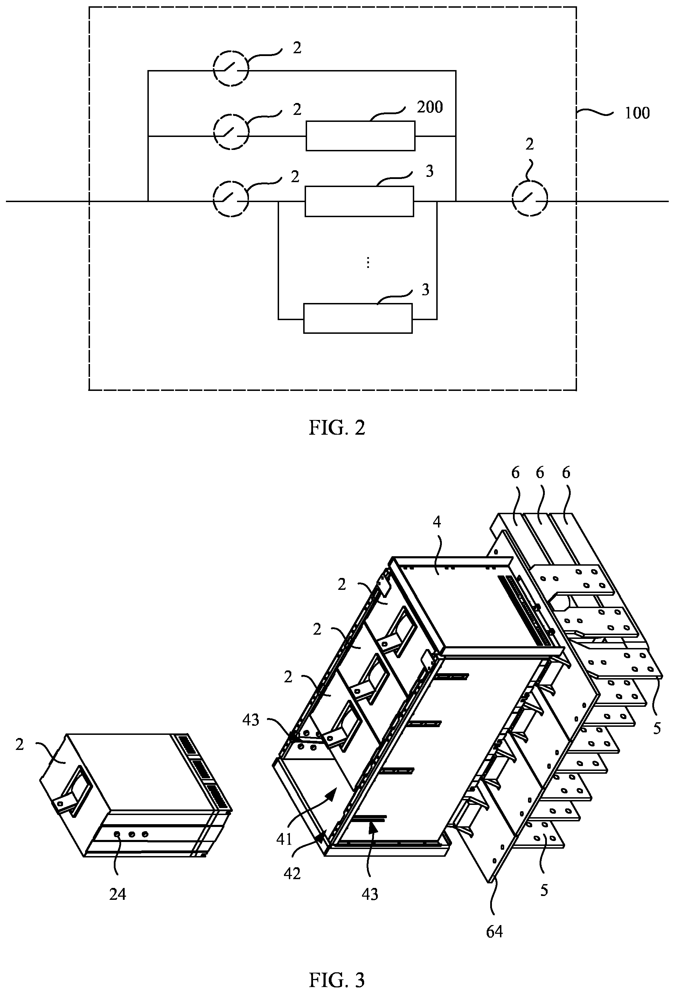

A quantity of circuit breakers 2 may be set according to a requirement. For example, one or more circuit breakers 2 may be disposed. FIG. 2 is an example of a simple circuit schematic of a mounting position of the circuit breaker 2. Refer to FIG. 2. Four circuit breakers 2 may be disposed. For example, the power cabinet 100 has three branches, one branch is connected to the plurality of power modules 3, another branch is connected to a bypass module 200, and the other branch directly supplies power as a substitute for mains. One circuit breaker 2 is mounted on each branch. In addition, one circuit breaker 2 is also disposed on a main circuit.

The circuit breaker 2 may be mounted in the cabinet body 1 in any appropriate manner. In an example, the circuit breaker 2 may be mounted in an insertion manner. FIG. 3 shows an example of a case in which the circuit breaker 2 is inserted. In the example shown in FIG. 3, one circuit breaker 2 has not been inserted, and the other three circuit breakers 2 have been inserted. The power cabinet 100 further includes a mounting base 4. The mounting base 4 is fastened in the cabinet body 1. For a position relationship between the mounting base 4 and the cabinet body 1, refer to FIG. 1.

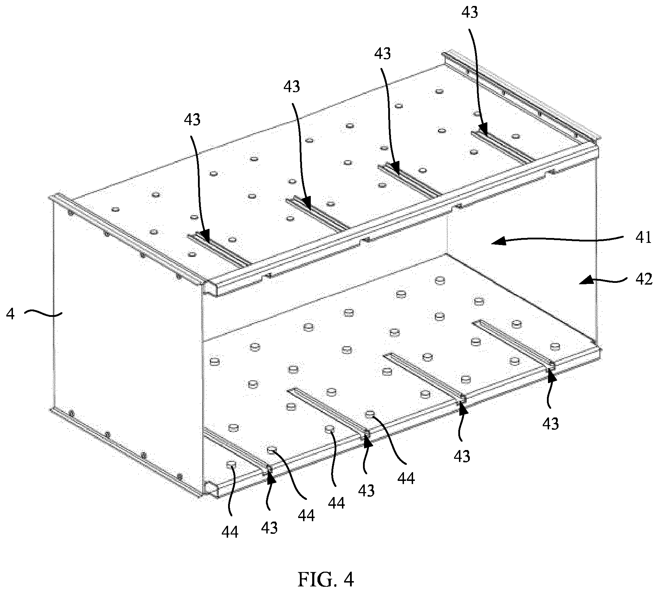

FIG. 4 shows an example of a structure of the mounting base 4. Refer to FIG. 3 and FIG. 4. The mounting base 4 has a mounting cavity 41 and a mounting opening 42 for the circuit breaker 2 to enter the mounting cavity 41. The mounting opening 42 may face the opening 11 of the cabinet body 1 (refer to FIG. 1).

Refer to FIG. 3 and FIG. 4. A wall surface that is of the mounting base 4 and that encloses the mounting cavity 41 has a sliding groove 43. In the examples shown in FIG. 3 and FIG. 4, a plurality of sliding grooves 43 are provided, and sliding grooves 43 are provided at both the top and the bottom of the mounting base 4. The sliding groove 43 extends to the mounting opening 42. Two sliding grooves 43 correspond to one circuit breaker 2. A slider 24 is disposed on the circuit breaker 2. To fit with the sliding grooves 43, sliders 24 are disposed at both the top and the bottom of the circuit breaker 2, and a slider 24 on each circuit breaker 2 is located in a corresponding sliding groove 43.

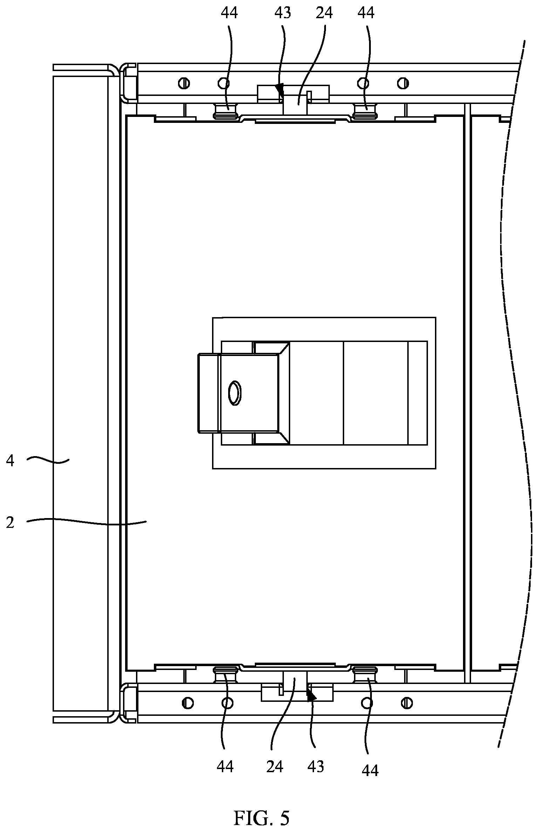

For example, FIG. 5 shows an example of fitting between the slider 24 and the sliding groove 43. A slider 24 at the top of each circuit breaker 2 is located in a sliding groove 43 that is at the top of the mounting base 4 and that fits with the circuit breaker 2, and a slider 24 at the bottom of each circuit breaker 2 is located in a sliding groove 43 that is at the bottom of the mounting base 4 and that fits with the circuit breaker 2. Each sliding groove 43 is used for sliding of a slider 24 in the sliding groove 43. When the circuit breaker 2 needs to be inserted into the mounting base 4, the circuit breaker 2 may be inserted into the mounting cavity 41 from the mounting opening 42, the slider 24 on the circuit breaker 2 is in sliding fitting with the corresponding sliding groove 43 on the mounting base 4, and the sliding groove 43 limits and guides the slider 24, that is, guides an insertion direction and a mounting path of the circuit breaker 2, to implement accurate insertion between the circuit breaker 2 and the mounting base 4.

In addition, in some examples, refer to FIG. 4. A plurality of support columns 44 (or referred to as bosses) may be fastened on the mounting base 4, and the plurality of support columns 44 are located in the mounting cavity 41. Support columns 44 may be disposed at both the top and the bottom of the mounting base 4, and a plurality of support columns 44 are disposed on two sides of each sliding groove 43. Refer to FIG. 5. After the circuit breaker 2 is mounted, the plurality of support columns 44 may support the circuit breaker 2.

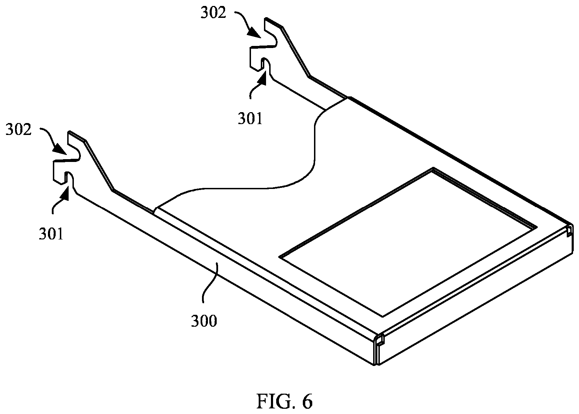

In some examples, the support column 44 may assist a handle 300 (for example, a tooling for mounting the circuit breaker 2) in mounting the circuit breaker 2. FIG. 6 shows an example of a structure of the handle 300. Refer to FIG. 5 and FIG. 6. A first clamping slot 301 and a second clamping slot 302 are provided on the handle 300. When the circuit breaker 2 is mounted, the first clamping slot 301 may be hooked on one of the support columns 44, and then the second clamping slot 302 abuts against the slider 24 on the circuit breaker 2, to push the circuit breaker 2 into the mounting base 4 through rotation and pressing. When the circuit breaker 2 needs to be pulled out, the first clamping slot 301 may be hooked on the slider 24, and then the second clamping slot 302 abuts against the support column 44, and the handle 300 is rotated or shaken, so that the circuit breaker 2 can be pulled out.

In some other examples, the slider 24 on the circuit breaker 2 may alternatively be a long strip and fit with the sliding groove 43. In this example, only one slider 24 may be disposed on each circuit breaker 2, or one slider 24 is disposed on each of the top and the bottom of each circuit breaker 2. In addition, in some examples, a position and a quantity of sliders 24 on the circuit breaker 2 may be set according to a requirement, and a position and a quantity of sliding grooves 43 may also be set according to a requirement. This is not specifically limited in this application.

In another example, the circuit breaker 2 may alternatively be inserted into the cabinet body 1 in another manner or by using another tool. This is not specifically limited in this application.

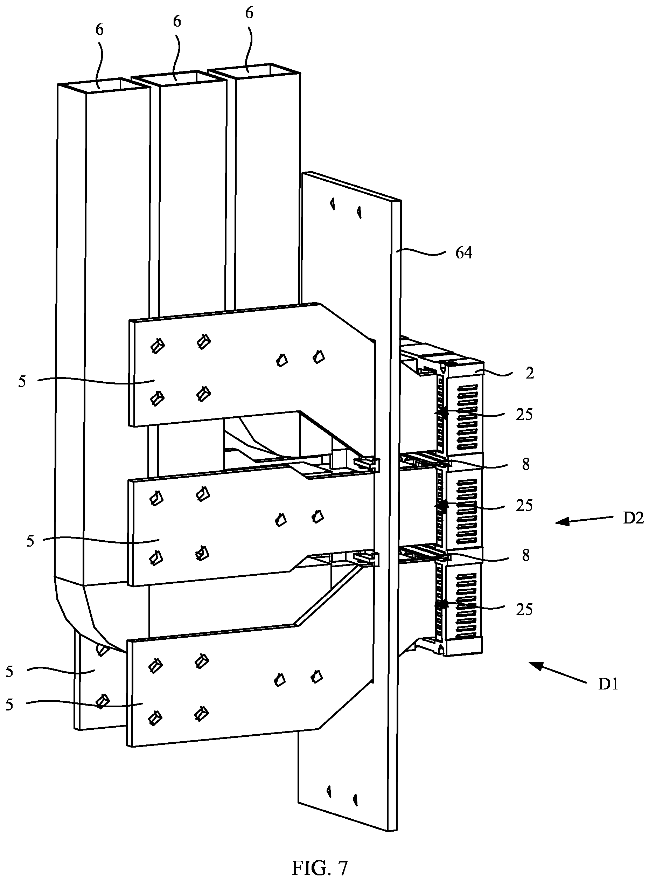

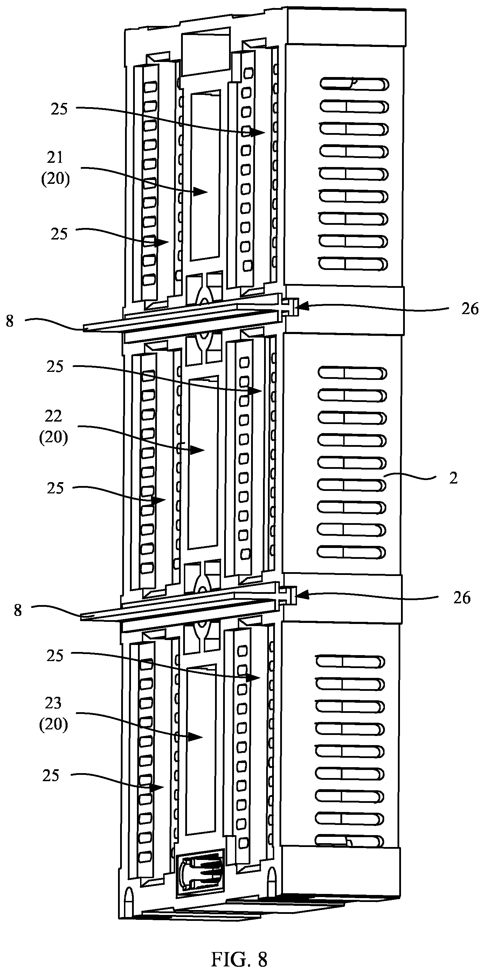

The power cabinet 100 further includes a plurality of busbars 5. The plurality of busbars 5 are fastened in the cabinet body 1. The circuit breaker 2 is mounted in the cabinet body 1 (for example, inserted on the mounting base 4). The circuit breaker 2 is electrically connected to the plurality of busbars 5 (for example, copper bars) in the cabinet body 1. FIG. 7 shows an example of a case in which one of the circuit breakers 2 is mounted in the cabinet body 1. It should be noted that, most of the circuit breaker 2 in FIG. 7 is hidden (not shown in the figure), and only a base of the circuit breaker 2 is left to indicate a position of the circuit breaker 2. FIG. 8 shows an example of the base of the circuit breaker 2 in FIG. 7. A plurality of sockets 25 are provided on the circuit breaker 2. Refer to FIG. 7 and FIG. 8. Each busbar 5 is correspondingly inserted into one socket 25.

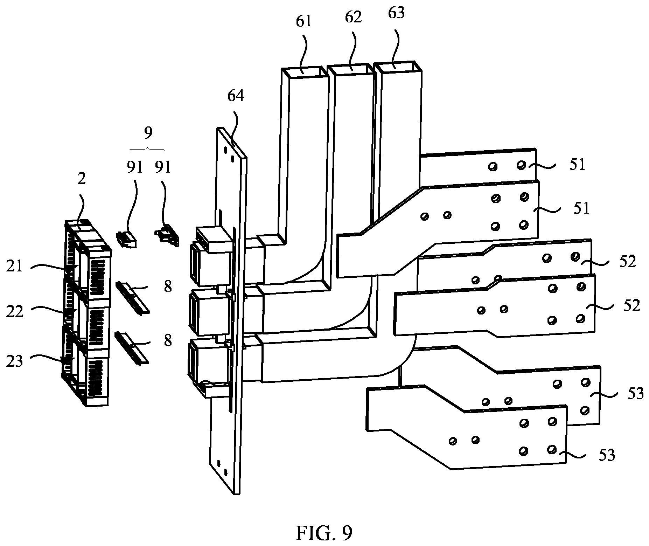

FIG. 9 is a partially exploded view of the structure in FIG. 7. Refer to FIG. 9. The plurality of busbars 5 include two first busbars 51. The two first busbars 51 are fastened in the cabinet body 1, and the circuit breaker 2 is mounted in the cabinet body 1 and electrically connected to the two first busbars 51. One of the two first busbars 51 may be an input busbar, and the other may be an output busbar. The circuit breaker 2 may be electrically connected to the two first busbars 51 in a plurality of manners. For example, refer to FIG. 8 and FIG. 9. After the circuit breaker 2 is mounted in the cabinet body 1, the two first busbars 51 are respectively inserted into corresponding sockets 25. The socket 25 has a connection terminal (for example, a terminal clip or a bridge-type contact) for electrically connecting to a corresponding busbar 5. In an example, after being inserted into the circuit breaker 2, the two first busbars 51 are respectively electrically connected to different static contacts by using a conductive structure in the circuit breaker 2. When the circuit breaker 2 performs breaking, a movable contact of the circuit breaker 2 breaks the two static contacts that are respectively electrically connected to the different first busbars 51, to break the two first busbars 51.

When the circuit breaker 2 performs breaking, high-voltage charged gas is sprayed. Refer to FIG. 8 and FIG. 9. The circuit breaker 2 has a plurality of arc spray vents 20, and gas generated when the circuit breaker 2 breaks the plurality of busbars 5 is sprayed from the corresponding arc spray vents 20. For example, the plurality of arc spray vents 20 include a first arc spray vent 21, and gas generated when the circuit breaker 2 breaks the two first busbars 51 is sprayed from the first arc spray vent 21.

In addition, the circuit breaker 2 may alternatively be a multiphase circuit breaker 2. For example, refer to FIG. 8 and FIG. 9. The circuit breaker 2 is a three-phase circuit breaker. The power cabinet 100 further includes two second busbars 52 and two third busbars 53, and the two second busbars 52 and the two third busbars 53 are both fastened in the cabinet body 1 and inserted into the circuit breaker 2 by using corresponding sockets 25. The circuit breaker 2 may break the two first busbars 51, may also break the two second busbars 52, and may further break the two third busbars 53. For example, the circuit breaker 2 may simultaneously break three groups of busbars.

In an example in which the circuit breaker 2 is the multiphase circuit breaker, refer to FIG. 8 and FIG. 9. The plurality of arc spray vents 20 further include a second arc spray vent 22 and a third arc spray vent 23. Gas generated when the circuit breaker 2 breaks the two second busbars 52 is sprayed from the second arc spray vent 22, and gas generated when the circuit breaker 2 breaks the two third busbars 53 is sprayed from the third arc spray vent 23. In the examples shown in FIG. 8 and FIG. 9, the first arc spray vent 21, the second arc spray vent 22, and the third arc spray vent 23 are located on the back of the circuit breaker 2 and face the backplane 14 of the cabinet body 1 (for the cabinet body 1, refer to FIG. 1). The first arc spray vent 21, the second arc spray vent 22, and the third arc spray vent 23 are spaced apart in the height direction of the cabinet body 1. In addition, the two first busbars 51 may be arranged in the width direction of the cabinet body 1, and the two second busbars 52 and the two third busbars 53 may also be arranged in the width direction of the cabinet body 1. The first arc spray vent 21 is located between the two first busbars 51, the second arc spray vent 22 is located between the two second busbars 52, and the third arc spray vent 23 is located between the two third busbars 53.

In an example, refer to FIG. 8 and FIG. 9. The power cabinet 100 may further include a dividing bar 8. The dividing bar 8 is fastened on a side that is of the circuit breaker 2 and that is used for insertion of the first busbar 51, and the dividing bar 8 protrudes outward. In the examples shown in FIG. 8 and FIG. 9, two dividing bars 8 may be disposed, one of the dividing bars 8 is located between the first arc spray vent 21 and the second arc spray vent 22, and the other dividing bar 8 is located between the second arc spray vent 22 and the third arc spray vent 23. An extension direction of each dividing bar 8 is perpendicular to an arrangement direction of the first arc spray vent 21 and the second arc spray vent 22, and each dividing bar 8 separates busbars 5 of different phases. For example, the dividing bar 8 between the first arc spray vent 21 and the second arc spray vent 22 separates the two first busbars 51 and the two second busbars 52, the two first busbars 51 are located on a side that is of the dividing bar 8 and that faces the first arc spray vent 21, and the two second busbars 52 are located on a side that is of the dividing bar 8 and that faces the second arc spray vent 22. For another example, the dividing bar 8 between the second arc spray vent 22 and the third arc spray vent 23 separates the two second busbars 52 and the two third busbars 53, the two second busbars 52 are located on a side that is of the dividing bar 8 and that faces the second arc spray vent 22, and the two third busbars 53 are located on a side that is of the dividing bar 8 and that faces the third arc spray vent 23.

As an inter-phase separation structure on the circuit breaker 2, the dividing bar 8 increases a creepage distance between busbars of two phases (for example, the first busbar 51 and the second busbar 52, or the second busbar 52 and the third busbar 53) of the circuit breaker 2, thereby improving insulation performance between adjacent busbars 5, and making the power cabinet 100 run more stably.

Refer to FIG. 8. The circuit breaker 2 has a mounting groove 26, and a quantity of mounting grooves 26 is the same as a quantity of dividing bars 8. In the example shown in FIG. 8, there are two mounting grooves 26 and two dividing bars 8. One of the mounting grooves 26 is located between the first arc spray vent 21 and the second arc spray vent 22 and is configured to mount one of the dividing bars 8. The other mounting groove 26 is located between the second arc spray vent 22 and the third arc spray vent 23 and is configured to mount the other dividing bar 8. An extension direction of each mounting groove 26 is perpendicular to the arrangement direction of the first arc spray vent 21 and the second arc spray vent 22. A part of each dividing bar 8 is located in a corresponding mounting groove 26, and the other part protrudes out of the mounting groove 26. The mounting groove 26 limits movement of the dividing bar 8 toward the first busbar 51. In this way, detaching of the dividing bar 8 from the mounting groove 26 is limited.

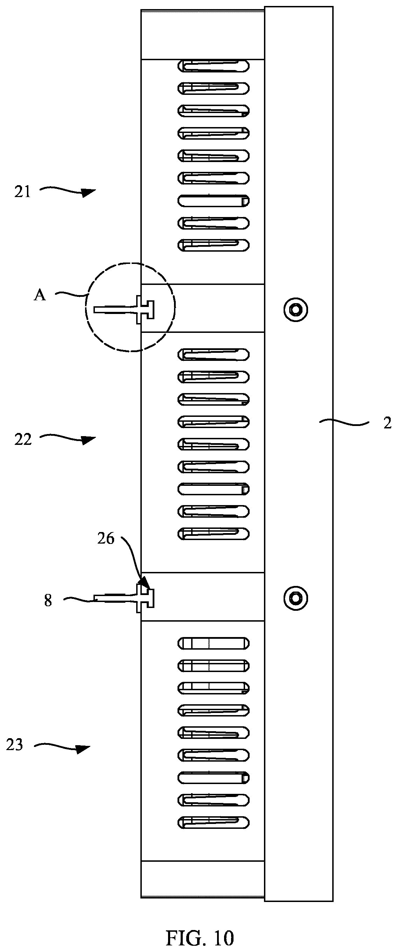

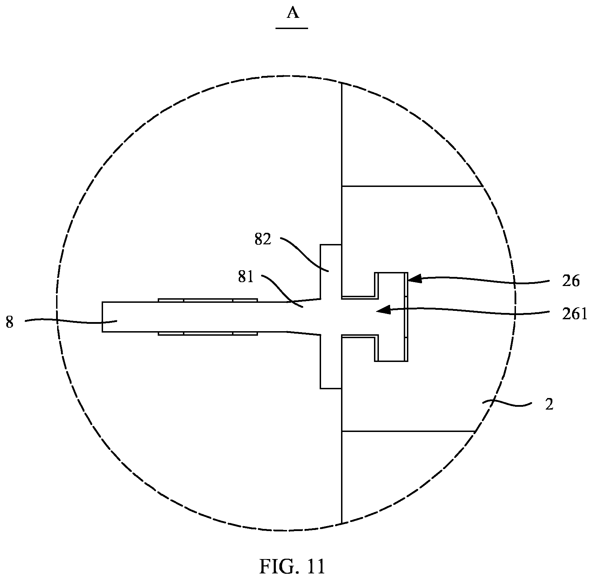

With regard to a limitation of the mounting groove 26 on the dividing bar 8, FIG. 10 shows an example of a structure of the mounting groove 26. FIG. 10 is a side view of the base of the circuit breaker 2 in FIG. 7 in a direction of an arrow D1. In FIG. 10, an arrow 21 indicates a rough position of the first arc spray vent 21, an arrow 22 indicates a rough position of the second arc spray vent 22, and an arrow 23 indicates a rough position of the third arc spray vent 23. FIG. 11 is an enlarged diagram of a part A in FIG. 10. Refer to FIG. 10 and FIG. 11. The mounting groove 26 is a step-shaped groove, a tail of the dividing bar 8 is a step-shaped block, and the tail of the dividing bar 8 is inserted into the mounting groove 26, so that the mounting groove 26 limits the dividing bar 8.

In addition, refer to FIG. 11. At least one of two side walls that are of the circuit breaker 2 and that are arranged in the extension direction of the mounting groove 26 has a plug-in port 261. For example, the two side walls of the circuit breaker 2 each have a plug-in port 261, and the plug-in port 261 communicates with the mounting groove 26. The plug-in port 261 may be understood as two groove openings in the extension direction of the mounting groove 26, or understood as a through hole formed by penetrating the side walls of the circuit breaker 2 by two ends of the mounting groove 26. The plug-in port 261 is used for inserting the dividing bar 8 into the mounting groove 26 or removing the dividing bar 8 from the mounting groove 26.

That is, when the dividing bar 8 needs to be mounted and fastened, the dividing bar 8 may be inserted into the mounting groove 26 from the plug-in port 261 on the side wall of the circuit breaker 2, and the dividing bar 8 slides in the extension direction of the mounting groove 26, so that the dividing bar 8 may be mounted in the mounting groove 26. After the dividing bar 8 is mounted, the mounting groove 26 can limit detaching of the dividing bar 8 from the mounting groove 26, thereby implementing mounting and fastening of the dividing bar 8 on the circuit breaker 2. When the dividing bar 8 needs to be removed, the dividing bar 8 may alternatively slide in a length direction of the mounting groove 26, and the dividing bar 8 is removed from the plug-in port 261.

A length of the dividing bar 8 may alternatively be the same as a length of the mounting groove 26, or a length of the dividing bar 8 may be greater than or less than a length of the dividing bar 8, provided that the dividing bar 8 can separate arc spray vents 20 of two adjacent phases and separate busbars 5 of two adjacent phases.

In some other examples, a cross section of the mounting groove 26 is a circular groove or a dovetail groove, and a shape of the tail that is of the dividing bar 8 and that is used to be inserted into the mounting groove 26 fits with a shape of the mounting groove 26. This is not specifically limited in this application.

In addition, refer to FIG. 11. The part that is of the dividing bar 8 and that is located outside the mounting groove 26 includes a protruding plate 81 and an abutting plate 82. The protruding plate 81 protrudes in a direction away from the circuit breaker 2. Refer to FIG. 10 and FIG. 11. For the dividing bar 8 located between the first arc spray vent 21 and the second arc spray vent 22, an abutting plate 82 of the dividing bar 8 is fastened on a side that is of a protruding plate 81 and that faces the first arc spray vent 21 or the second arc spray vent 22. For example, one abutting plate 82 is disposed on each of two sides of the protruding plate 81 of the dividing bar 8, and the abutting plate 82 is configured to abut against the circuit breaker 2. In another example, an abutting plate 82 may alternatively be fastened only on a side of the protruding plate 81. For example, the abutting plate 82 is fastened only on a side that is of the protruding plate 81 and that faces the first arc spray vent 21, or the abutting plate 82 is fastened only on a side that is of the protruding plate 81 and that faces the second arc spray vent 22. A length direction of the abutting plate 82 may be the same as a length direction (an extension direction, not the protruding direction described above) of the protruding plate 81. In another example, the abutting plate 82 may be shorter than the protruding plate 81, or a plurality of abutting plates 82 may be disposed and spaced apart in the length direction of the protruding plate 81.

For the dividing bar 8 located between the second arc spray vent 22 and the third arc spray vent 23, an abutting plate 82 of the dividing bar 8 is fastened on a side that is of a protruding plate 81 and that faces the second arc spray vent 22 or the third arc spray vent 23. For example, one abutting plate 82 is disposed on each of two sides of the protruding plate 81 of the dividing bar 8, and the abutting plate 82 is configured to abut against the circuit breaker 2. In another example, an abutting plate 82 may alternatively be fastened only on a side of the protruding plate 81. For example, the abutting plate 82 is fastened only on a side that is of the protruding plate 81 and that faces the second arc spray vent 22, or the abutting plate 82 is fastened only on a side that is of the protruding plate 81 and that faces the third arc spray vent 23.

In a case in which the dividing bar 8 is mounted in the mounting groove 26, the protruding plate 81 located outside the mounting groove 26 mainly increases an inter-phase creepage distance. In addition, the abutting plate 82 can increase the creepage distance to some extent, and can also limit swinging of the dividing bar 8 by abutting against the circuit breaker 2, to improve stability of the dividing bar 8 present after mounting. FIG. 11 shows an example in which the tail of the dividing bar 8 is in a shape of " 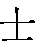 ". In another example, the tail of the dividing bar 8 may alternatively be in another appropriate shape, for example, in a shape of " 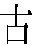 ". This is not specifically limited in this application.

Return to refer to FIG. 7 and FIG. 8. The power cabinet 100 further includes at least one pipe 6 (FIG. 7 shows a case of three pipes 6), the pipe 6 is fastened in the cabinet body 1 (for the cabinet body 1, refer to FIG. 1), and the pipe 6 communicates with the arc spray vent 21. For example, refer to FIG. 9. The pipe 6 may include a first pipe 61. The first pipe 61 is fastened in the cabinet body 1, and the first pipe 61 communicates with the first arc spray vent 21. After the circuit breaker 2 breaks the two first busbars 51, high-voltage charged gas is sprayed from the first arc spray vent 21 of the circuit breaker 2. Because the first pipe 61 communicates with the first arc spray vent 21, the gas sprayed from the first arc spray vent 21 enters the first pipe 61 and does not spread around after being sprayed from the first arc spray vent 21. The first pipe 61 has specific constraint effect on gas sprayed from the circuit breaker 2. This reduces a possibility that a component around the circuit breaker 2 is affected by gas sprayed from the circuit breaker 2.

The pipe 6 also provides space for cooling and deposition of gas sprayed from the circuit breaker 2. In a process of passing through the pipe 6, some impurities in the gas are deposited in the pipe 6, thereby reducing impact of the impurities on another device in the cabinet body 1. Disposing the pipe 6 further prolongs discharge time of gas, so that high-temperature gas is cooled to some extent in a process of passing through the pipe 6, thereby reducing a temperature present when the gas is discharged from the pipe 6.

In addition, a shape of the pipe 6 may be set according to a requirement. For example, the pipe 6 may be a straight pipe extending in a thickness direction of the cabinet body 1 (for the cabinet body 1, refer to FIG. 1). For another example, the pipe 6 may alternatively be a curved or bent pipe. The shape of the pipe 6 is set, so that gas sprayed from the arc spray vent 20 can be guided to a better discharge position through the pipe 6. For example, an air discharge end of the pipe 6 is disposed away from the busbar 5. This reduces a possibility that gas sprayed from the circuit breaker 2 is attached to the busbar 5, reduces a possibility that the busbar 5 is ablated or blackened, and makes the power cabinet 100 run more stably.

In an example in which the circuit breaker 2 has the second arc spray vent 22 and the third arc spray vent 23, refer to FIG. 8 and FIG. 9. The power cabinet 100 may further include a second pipe 62 and a third pipe 63 that are fastened in the cabinet body 1. The second pipe 62 communicates with the second arc spray vent 22, and the third pipe 63 communicates with the third arc spray vent 23. That is, in a process in which the circuit breaker 2 breaks the two second busbars 52, gas generated during breaking is sprayed from the second arc spray vent 22 and enters the second pipe 62. In a process in which the circuit breaker 2 breaks the two third busbars 53, gas generated during breaking is sprayed from the third arc spray vent 23 and enters the third pipe 63.

Refer to FIG. 8 and FIG. 9. The power cabinet 100 further includes a mounting plate 64. The mounting plate 64 is fastened in the cabinet body 1 (for the cabinet body 1, refer to FIG. 1). The mounting plate 64 and the circuit breaker 2 are arranged in the thickness direction of the cabinet body 1. The arc spray vent 20 of the circuit breaker 2 faces the mounting plate 64. Pipes 6 (for example, the first pipe 61, the second pipe 62, and the third pipe 63) are fastened on the mounting plate 64. Two ends of each pipe 6 are located on different sides of the mounting plate 64. That is, the pipe 6 extends toward two sides of the mounting plate 64. An end that is of the pipe 6 and that is close to the circuit breaker 2 communicates with a corresponding arc spray vent 20. Refer back to FIG. 7. The plurality of sockets 25 of the circuit breaker 2 also face the mounting plate 64, and the plurality of busbars 5 all pass through the mounting plate 64 and are respectively inserted into the corresponding sockets 25.

The circuit breaker 2 may be mounted in the cabinet body 1 in an insertion manner. In a process of inserting the circuit breaker 2, the arc spray vent 20 of the circuit breaker 2 communicates with the pipe 6 in a fitting manner (for example, the first arc spray vent 21 communicates with the first pipe 61 in a fitting manner). In addition, the plurality of busbars 5 in the cabinet body 1 are also inserted into the sockets 25 corresponding to the circuit breaker 2, to implement an electrical connection to the circuit breaker 2. The mounting plate 64 can fasten the pipe 6, and can also limit the plurality of busbars 5, thereby reducing a possibility that the plurality of busbars 5 shake randomly, and facilitating mounting of the pipe 6.

In an example in which the pipes 6 include the first pipe 61, the second pipe 62, and the third pipe 63, the first pipe 61, the second pipe 62, and the third pipe 63 are fastened on the mounting plate 64. Two ends of the second pipe 62 and two ends of the third pipe 63 are respectively located on the different sides of the mounting plate 64, that is, both the second pipe 62 and the third pipe 63 extend toward the two sides of the mounting plate 64. In addition, the two first busbars 51, the two second busbars 52, and the two third busbars 53 all pass through the mounting plate 64, so that integration between structures is higher. The mounting plate 64 only needs to be mounted in the cabinet body 1, to mount the first pipe 61, the second pipe 62, and the third pipe 63, and limit the two first busbars 51, the two second busbars 52, and the two third busbars 53.

In an example, the plurality of busbars 5 that pass through the mounting plate 64 may be fastened on the mounting plate 64. For example, angle steel may be disposed between the first busbar 51 and the mounting plate 64, and the first busbar 51 and the mounting plate 64 are fastened by using a bolt. In an example in which both the second busbar 52 and the third busbar 53 pass through the mounting plate 64, the second busbar 52 and the third busbar 53 may also be fastened on the mounting plate 64. In a case of mounting the circuit breaker 2 in an insertion manner, the busbar 5 (for example, the first busbar 51, the second busbar 52, or the third busbar 53) is fastened on the mounting plate 64. In a process of inserting the circuit breaker 2, an insertion hole corresponding to the circuit breaker 2 and the busbar 5 are not easily misplaced. This also reduces a possibility of bending or damaging the busbar 5 in a process of mounting the circuit breaker 2, and facilitates mounting the circuit breaker 2 in an insertion manner.

Refer to FIG. 7 or FIG. 9. In an example in which the dividing bar 8 is disposed on the circuit breaker 2, the dividing bar 8 is fastened on a side that is of the circuit breaker 2 and that faces the mounting plate 64, and the dividing bar 8 protrudes toward the mounting plate 64. In an example in which the dividing bar 8 includes the protruding plate 81, the protruding plate 81 protrudes toward the mounting plate 64. In an example in which the circuit breaker 2 has the mounting groove 26, the mounting groove 26 is provided on a side wall that is of the circuit breaker 2 and that faces the mounting plate 64.

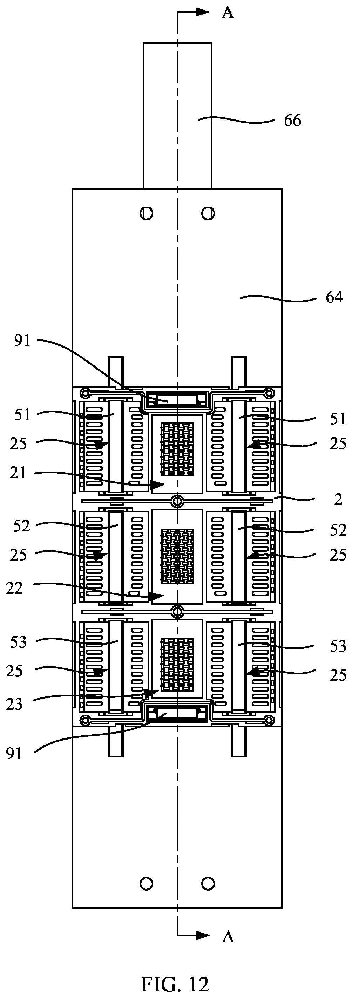

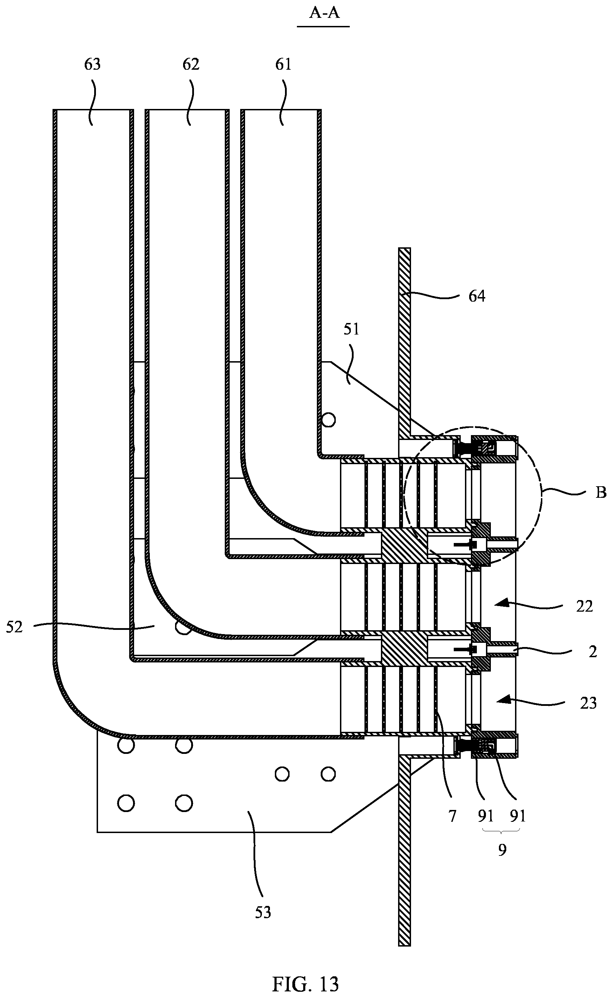

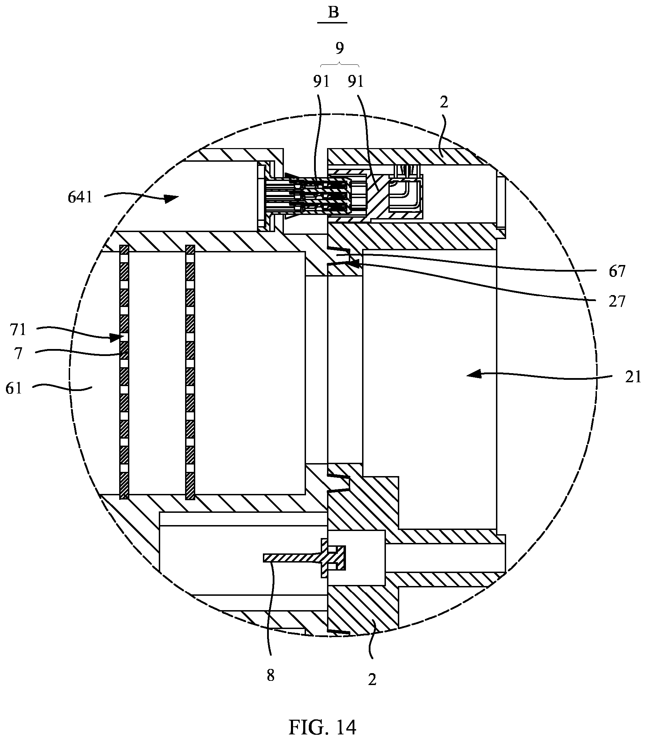

FIG. 12 is an example of a diagram of the structure in FIG. 7 from an angle of view in a direction of an arrow D2. FIG. 13 is a cross-sectional view along A-A in FIG. 12. Refer to FIG. 13. The pipe 6 (for example, the first pipe 61, the second pipe 62, or the third pipe 63) communicates with a corresponding arc spray vent 20. FIG. 14 is an enlarged view of a part B in FIG. 13. Refer to FIG. 14. One of the pipe 6 and the circuit breaker 2 has a protruding rib 67, and the other has a groove 27 that fits with the protruding rib 67. The first pipe 61 in FIG. 14 is used as an example. One of the first pipe 61 and the circuit breaker 2 has a protruding rib 67, and the other has a groove 27 that fits with the protruding rib 67. For example, the first pipe 61 has the protruding rib 67, the circuit breaker 2 has the groove 27, and the protruding rib 67 is inserted into the groove 27. In another example, the circuit breaker 2 has the protruding rib 67, and the first pipe 61 has the groove 27.

Both the protruding rib 67 and the groove 27 surround the arc spray vent 20. The first arc spray vent 21 in FIG. 14 is used as an example. The protruding rib 67 is annular (square ring-shaped, circular ring-shaped, special ring-shaped, or the like) and is disposed at a pipe opening of the first pipe 61, and the protruding rib 67 surrounds a pipe opening that is of the first pipe 61 and that faces the circuit breaker 2. The groove 27 that is on the circuit breaker 2 and that fits with the protruding rib 67 is annular (square ring-shaped, circular ring-shaped, special ring-shaped, or the like) and surrounds the first arc spray vent 21. After the annular protruding rib 67 is inserted into the annular groove 27, both the protruding rib 67 and the groove 27 surround the first arc spray vent 21. In this way, an annular sealing structure is formed at a communication position between the first arc spray vent 21 and the first pipe 61, to reduce a possibility that gas sprayed from the circuit breaker 2 leaks from the communication position between the first arc spray vent 21 and the first pipe 61, and enable more gas sprayed from the first arc spray vent 21 to enter the first pipe 61, thereby better controlling and guiding the gas sprayed from the circuit breaker 2.

In another example, the protruding rib 67 and the groove 27 may not surround the first arc spray vent 21, the protruding rib 67 may be columnar, sheet-shaped, plate-shaped, or the like, and a shape of the groove 27 fits with a shape of the protruding rib 67, provided that insertion fitting between the protruding rib 67 and the groove 27 is implemented.

When the circuit breaker 2 is inserted, the protruding rib 67 may be inserted into the groove 27 that fits with the circuit breaker 2, to reduce a possibility of misplacement between the arc spray vent 20 and the pipe 6, and enable gas sprayed from the arc spray vent 20 to enter the pipe 6 more accurately. In addition, when the protruding rib 67 cannot be inserted into the groove 27, insertion of the circuit breaker 2 cannot be completed. This can also remind an installation engineer to adjust a mounting position and a mounting angle as soon as possible, to complete accurate mounting as soon as possible.

Refer to FIG. 13 and FIG. 14. Corresponding protruding ribs 67 and grooves 27 may also be disposed at a communication position between the second pipe 62 and the second arc spray vent 22 and a communication position between the third pipe 63 and the third arc spray vent 23. In addition, a protruding rib 67 and a groove 27 at the communication position between the second pipe 62 and the second arc spray vent 22 may be disposed around the second arc spray vent 22, and a protruding rib 67 and a groove 27 at the communication position between the third pipe 63 and the third arc spray vent 23 may be disposed around the third arc spray vent 23.

Refer to FIG. 13 and FIG. 14. The power cabinet 100 further includes a filter screen 7 (or referred to as a filter disc), and the filter screen 7 is disposed in the pipe 6. In the examples shown in FIG. 13 and FIG. 14, a plurality of filter screens 7 may be disposed, and the filter screens 7 are fastened in the first pipe 61, the second pipe 62, and the third pipe 63. FIG. 14 shows a part of filter screens 7 in the first pipe 61. The part of the filter screens 7 is fastened in the first pipe 61, for example, there is an insertion groove in the first pipe 61, and an outer edge of the filter screen 7 is inserted into the insertion groove.

Refer to FIG. 14. The filter screen 7 has a plurality of air holes 71 for gas to pass through. When gas discharged by the circuit breaker 2 passes through the first pipe 61, the filter screen 7 can filter the gas in the first pipe 61, to filter out large particles of impurities, and more impurities are deposited in the first pipe 61, thereby reducing a possibility that impurities enter the cabinet body 1 and affect another device and another component. This reduces a failure rate of the power cabinet 100 and makes the power cabinet 100 run more stably. In addition, the filter screen 7 may also interrupt a flame. When gas sprayed from the first arc spray vent 21 contains a flame, the filter screen 7 can extinguish the flame.

At least one filter screen 7 may be magnetic. In a case in which the filter screen 7 is magnetic, the filter screen 7 can filter gas, and can also absorb metal impurities, so that small particles of metal impurities are also blocked on the filter screen 7, thereby further improving a filtering capability of the filter screen 7. At least one filter screen 7 may alternatively be a gas-generating sheet, and the filter screen 7 is configured to be heated to generate hydrogen gas. In a case in which the filter screen 7 is the gas-generating sheet, after gas sprayed from the first arc spray vent 21 enters the first pipe 61, a temperature in the first pipe 61 increases, an ambient temperature of the filter screen 7 increases, the filter screen 7 is heated to generate hydrogen gas, and the hydrogen gas has good heat conductivity and performs a function of cooling an electric arc. In addition, the hydrogen gas also reacts with oxygen in the first pipe 61, and generates water under heating of the sprayed gas (or a flame), to perform cooling and extinguish the flame.

In an example, there are a plurality of filter screens 7 in the first pipe 61, and the plurality of filter screens 7 include at least one magnetic filter screen 7. In another example, there are a plurality of filter screens 7 in the first pipe 61, and the plurality of filter screens 7 include at least one filter screen 7 that can be heated to generate hydrogen gas. In another example, there are a plurality of filter screens 7 in the first pipe 61, and the plurality of filter screens 7 include at least one magnetic filter screen 7 and at least one filter screen 7 that can be heated to generate hydrogen gas. In another example, the filter screen 7 is a metal mesh or a non-metal mesh, and has only a function of filtering large particles of impurities or extinguishing a flame.

A plurality of filter screens 7 may also be disposed in the second pipe 62, and the filter screen 7 in the second pipe 62 may include at least one of a magnetic filter screen 7 or a filter screen 7 capable of generating gas. A plurality of filter screens 7 may also be disposed in the third pipe 63, and the filter screen 7 in the third pipe 63 may include at least one of a magnetic filter screen 7 or a filter screen 7 capable of generating gas.

In addition, a plurality of filter screens 7 may be disposed in the corresponding pipe 6, and an arrangement direction of the plurality of filter screens 7 in the corresponding pipe may be set according to a requirement. For example, the plurality of filter screens 7 are disposed in the first pipe 61. The plurality of filter screens 7 may be distributed in an extension direction of the first pipe 61, for example, the plurality of filter screens 7 in FIG. 14 are distributed in a horizontal direction of the figure. In other examples, a distribution direction of the plurality of filter screens 7 may be perpendicular to an extension direction of the first pipe 61, for example, the plurality of filter screens 7 in FIG. 14 are distributed in a vertical direction of the figure (the distribution manner is not shown in the figure).

In some other examples, the filter screen 7 may be bent or disposed in a wave shape.

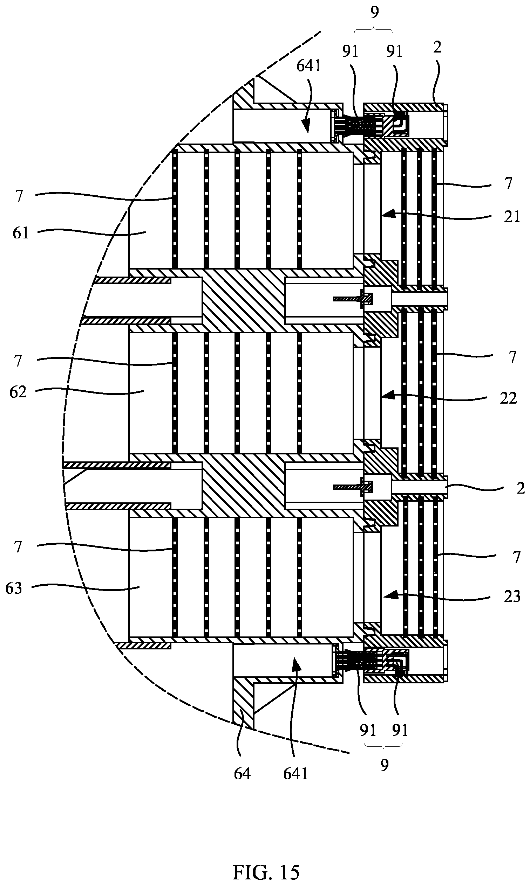

FIG. 15 is an example of a diagram of a partial structure of another circuit breaker 2 present after mounting. Refer to FIG. 15. A plurality of filter screens 7 may be disposed in both the pipe 6 and an arc spray vent 20 of the circuit breaker 2. For example, a plurality of filter screens 7 may be disposed in both the first pipe 61 and a first arc spray vent 21 of the circuit breaker 2, a plurality of filter screens 7 may be disposed in both the second pipe 62 and a second arc spray vent 22 of the circuit breaker 2, and a plurality of filter screens 7 may be disposed in both the third pipe 63 and a third arc spray vent 23 of the circuit breaker 2.

The power cabinet 100 further includes at least one terminal group 9 for signal transmission, each terminal group 9 includes two signal terminals 91 for insertion fitting, one of the two signal terminals 91 in each terminal group 9 is fastened on the mounting plate 64, and the other is fastened on the circuit breaker 2. For example, in the example shown in FIG. 15, an accommodating cavity 641 for mounting the signal terminal 91 is formed on the mounting plate 64, two signal terminals 91 are disposed on each mounting plate 64, each signal terminal 91 on the mounting plate 64 is electrically connected to a signal cable, and the first pipe 61, the second pipe 62, and the third pipe 63 are located between the two signal terminals 91. In addition, two signal terminals 91 are fastened on each circuit breaker 2, and a first arc spray vent 21, a second arc spray vent 22, and a third arc spray vent 23 are located between the two signal terminals 91. Each signal terminal 91 on the mounting plate 64 fits with a corresponding signal terminal 91 on the circuit breaker 2 in an insertion manner, to form a terminal group 9.

In another example, only one signal terminal 91 may be disposed on the mounting plate 64, one signal terminal 91 that fits with the signal terminal 91 on the mounting plate 64 is disposed on the circuit breaker 2, and the two signal terminals 91 can perform insertion fitting, to form a terminal group 9.

The mounting plate 64 provides a mounting position for the signal terminal 91, so that the signal terminal 91 is integrated on the mounting plate 64. This facilitates connection and fastening of components in the cabinet body 1. After the circuit breaker 2 is inserted into the cabinet body 1, the signal terminal 91 on the circuit breaker 2 fits with the signal terminal 91 on the mounting plate 64 in an insertion manner, to complete a connection between the two signal terminals 91, thereby facilitating signal transmission between the cabinet body 1 and the circuit breaker 2. A signal transferred by using the terminal group 9 may include at least one of a breaking signal, a temperature detection or temperature collection signal, and a circuit breaker 2 insertion completion signal.

In another example, one of the two signal terminals 91 in each terminal group 9 may alternatively be disposed at the top or on a side part of the circuit breaker 2, and the other may be disposed on the cabinet body 1, that is, the signal terminal 91 that fits with the signal terminal 91 on the circuit breaker 2 in an insertion manner may not be disposed on the mounting plate 64.

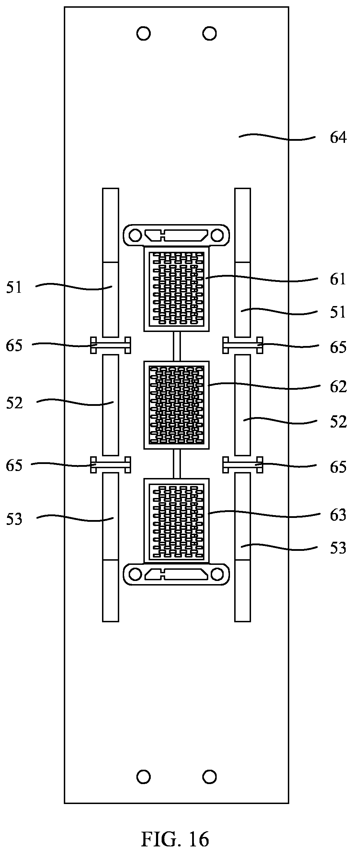

The power cabinet 100 may further include a plurality of spacers 65. FIG. 16 shows an example of a structure of the spacer 65. The plurality of spacers 65 are fastened on a plate surface of the mounting plate 64. A material of the mounting plate 64 and a material of the spacer 65 are both insulation materials. For example, both the mounting plate 64 and the spacer 65 are plastic plates. An arrangement direction of the two first busbars 51, an arrangement direction of the two second busbars 52, and an arrangement direction of the two third busbars 53 are perpendicular to an arrangement direction of the first pipe 61 and the second pipe 62. For example, two busbars 5 (for example, the two first busbars 51) of each phase are arranged in the width direction of the cabinet body 1 (refer to FIG. 1), and the first arc spray vent 21, the second arc spray vent 22, and the third arc spray vent 23 are arranged in the height direction of the cabinet body 1. The first pipe 61 is located between the two first busbars 51, the second pipe 62 is located between the two second busbars 52, and the third pipe 63 is located between the two third busbars 53. In the arrangement direction of the first pipe 61 and the second pipe 62 (for example, in the height direction of the cabinet body 1), at least one (one or more) spacer 65 is disposed between a first busbar 51 and a second busbar 52 that are adjacent, and at least one spacer 65 is disposed between a second busbar 52 and a third busbar 53 that are adjacent.

The spacer 65 is disposed between adjacent busbars 5 of two phases, so that the spacer 65 becomes an inter-phase separation structure on the mounting plate 64, a creepage distance between busbars 5 of two phases (for example, the first busbar 51 and the second busbar 52, or the second busbar 52 and the third busbar 53) is increased, insulation between adjacent busbars 5 is improved, and the power cabinet 100 runs more stably.

For example, in the example shown in FIG. 16, a spacer 65 is disposed between a first busbar 51 and a second busbar 52 on a left side of the figure, and a spacer 65 is also disposed between a first busbar 51 and a second busbar 52 on a right side of the figure. A spacer 65 is disposed between the second busbar 52 and a third busbar 53 on the left side of the figure, and a spacer 65 is also disposed between the second busbar 52 and a third busbar 53 on the right side of the figure.

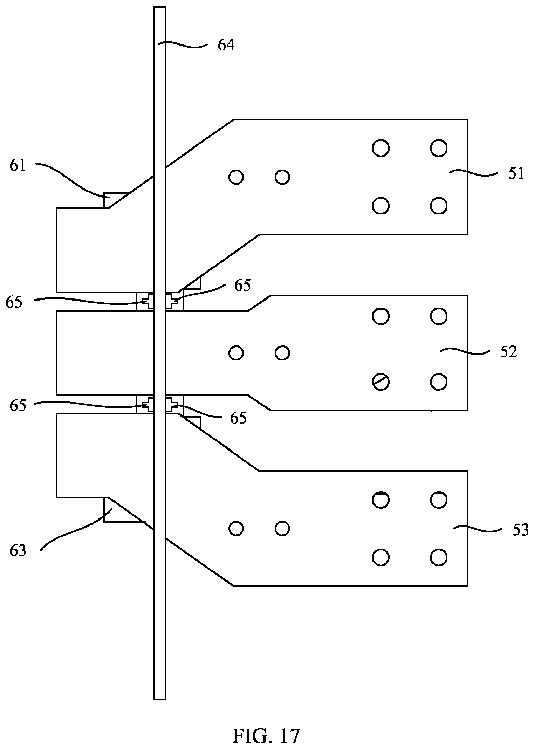

In some examples, in a distribution direction of the first pipe 61 and the second pipe 62, two spacers 65 may be disposed between one first busbar 51 and one second busbar 52 that are adjacent, and the two spacers 65 are respectively fastened on different plate surfaces of the mounting plate 64. FIG. 17 shows an example of a case in which spacers 65 are fastened on different plate surfaces of the mounting plate 64. FIG. 17 is a side view of FIG. 16. Similarly, two spacers 65 may also be disposed between one second busbar 52 and one third busbar 53 that are adjacent, and the two spacers 65 are respectively fastened on different plate surfaces of the mounting plate 64.

In another example, the two first busbars 51 and the two second busbars 52 may be separated by one spacer 65. The spacer 65 is disposed on one of the plate surfaces of the mounting plate 64, and the spacer 65 also separates the first arc spray vent 21 and the second arc spray vent 22. Alternatively, the two first busbars 51 and the two second busbars 52 may be separated by two spacers 65. The two spacers 65 are respectively fastened on different plate surfaces of the mounting plate 64, and the two spacers 65 separate the first arc spray vent 21 and the second arc spray vent 22 respectively from different sides.

In another example, the two second busbars 52 and the two third busbars 53 may be separated by one spacer 65. The spacer 65 is disposed on one of the plate surfaces of the mounting plate 64, and the spacer 65 also separates the second arc spray vent 22 and the third arc spray vent 23. Alternatively, the two second busbars 52 and the two third busbars 53 may be separated by two spacers 65. The two spacers 65 are respectively fastened on different plate surfaces of the mounting plate 64, and the two spacers 65 also separate from the second arc spray vent 22 and the third arc spray vent 23 respectively from different sides.

The power cabinet 100 is continuously developing toward miniaturization under leadership of a trend of capacity upgrade and a high density. A width of the cabinet body 1 greatly affects an area occupied by the power cabinet 100, especially in a scenario in which a plurality of power cabinets 100 are spliced. In an example in which the power cabinet 100 has the mounting plate 64, a ratio of a maximum dimension of the mounting plate 64 in the width direction of the cabinet body 1 (refer to FIG. 1) to a maximum dimension of the circuit breaker 2 in the width direction of the cabinet body 1 is not greater than 1.2.

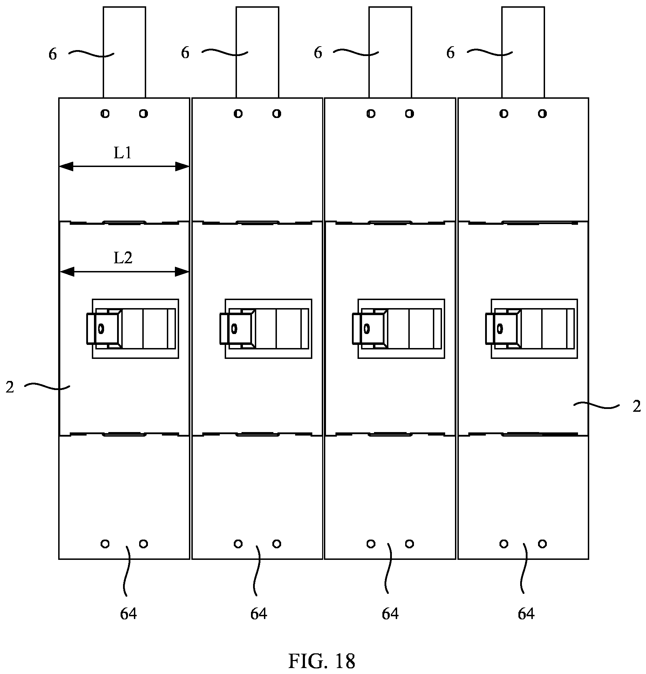

FIG. 18 is an example of a diagram of dimensions of the circuit breaker 2 and the mounting plate 64. A horizontal direction of the figure is the width direction of the cabinet body 1, the maximum dimension of the mounting plate 64 in the width direction of the cabinet body 1 is L1, the maximum dimension of the circuit breaker 2 in the width direction of the cabinet body 1 is L2, and L1:L2≤1.2. For example, L1:L2=0.8. In this example, a width of the mounting plate 64 is slightly less than a width of the circuit breaker 2. For another example, L1:L2=1. In this example, a width of the mounting plate 64 is equal to a width of the circuit breaker 2. For another example, L1:L2=1.2. In this example, a width of the mounting plate 64 is slightly greater than a width of the circuit breaker 2.

The width of the mounting plate 64 is controlled within a specific range. For example, the width of the mounting plate 64 is close to the width of the circuit breaker 2, and the width of the mounting plate 64 is not excessively large. In a case in which a plurality of circuit breakers 2 are all equipped with mounting plates 64, the mounting plate 64 does not affect compact mounting of the plurality of circuit breakers 2, and an overall width present after the plurality of circuit breakers 2 are combined is reduced, thereby reducing a dimension of the cabinet body 1 in the width direction.

In some other examples, a plurality of circuit breakers 2 are disposed, and only one mounting plate 64 may be disposed. For example, each of the plurality of circuit breakers 2 has a first pipe 61 that fits with the circuit breaker 2, and a plurality of first pipes 61 are fastened on one mounting plate 64.

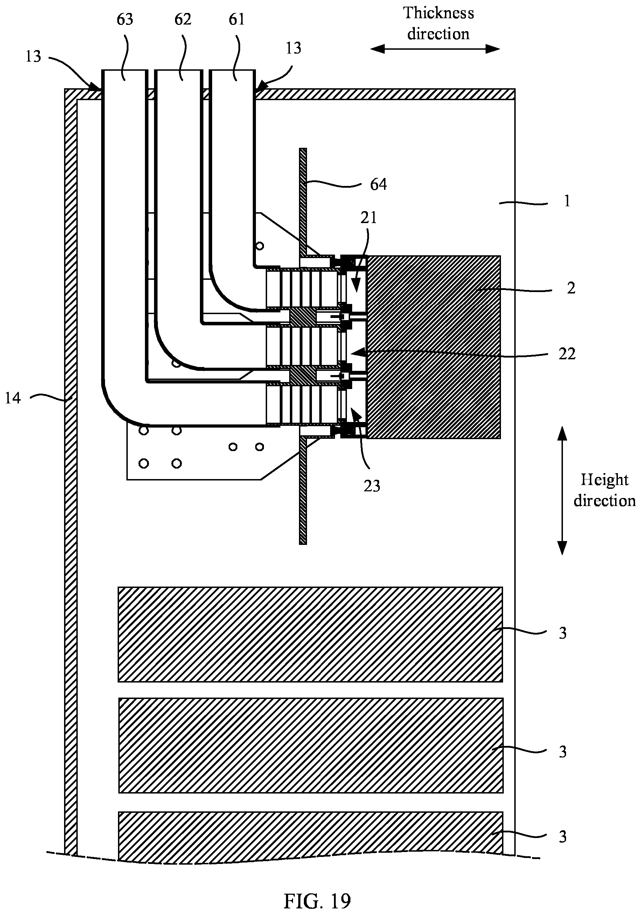

In addition, in some examples, the pipe 6 may extend out of the cabinet body 1, and a through hole 13 for the pipe 6 to pass through is provided on the cabinet body 1. FIG. 19 shows an example of a structure of the through hole 13. Refer to FIG. 19, a plurality of pipes 6 extend out of the cabinet body 1 through corresponding through holes 13. In an example in which the pipes 6 include the first pipe 61, the second pipe 62, and the second pipe 62, the first pipe 61, the second pipe 62, and the third pipe 63 may be provided in a manner of avoiding each other, and each of the first pipe 61, the second pipe 62, and the third pipe 63 extends out of the cabinet body 1 through a corresponding through hole 13, thereby reducing a possibility of mutual interference between the plurality of pipes 6.

In another example, the plurality of pipes 6 may alternatively extend out of the cabinet body 1 through one through hole 13.

Gas sprayed from the circuit breaker 2 through the first arc spray vent 21 may be discharged to the outside of the cabinet body 1 through a pipe 6 at the first arc spray vent 21. Similarly, gas sprayed from the circuit breaker 2 through the second arc spray vent 22 and the third arc spray vent 23 may also be discharged to the outside of the cabinet body 1 through corresponding pipes 6. Gas sprayed from the circuit breaker 2 does not directly enter the cabinet body 1 and be attached to the busbar 5 (the first busbar 51, the second busbar 52, or the third busbar 53). This further reduces a possibility that high-temperature charged gas causes the busbar 5 to be blackened or ablated, and does not affect an environment in the cabinet body 1. In addition, impurities deposited in the first pipe 61, the second pipe 62, and the third pipe 63 are also sprayed out of the cabinet body 1 through the corresponding pipes 6, thereby further reducing a possibility that the impurities affect another component or another device in the cabinet body 1.

The through hole 13 may be provided at any appropriate position, and a shape of the pipe 6 may fit with the position of the through hole 13. For example, the through hole 13 is located at the top of the cabinet body 1. The pipes 6 (for example, the first pipe 61, the second pipe 62, and the third pipe 63) may be bent and include a part extending in the thickness direction of the cabinet body 1 and a part extending in the height direction of the cabinet body 1. The part that is of the pipe 6 and that extends in the thickness direction of the cabinet body 1 communicates with a corresponding arc spray vent 20 (for example, the first arc spray vent 21, the second arc spray vent 22, or the third arc spray vent 23), and the part that is of the pipe 6 and that extends in the height direction of the cabinet body 1 extends to above the cabinet body 1 from the through hole 13. In a scenario in which power cabinets 100 are combined, the through hole 13 is provided at the top of the cabinet body 1, so that gas sprayed from the circuit breaker 2 is discharged from the top of the cabinet body 1 under guidance of the pipe 6, thereby reducing impact of discharged gas on another power cabinet 100.

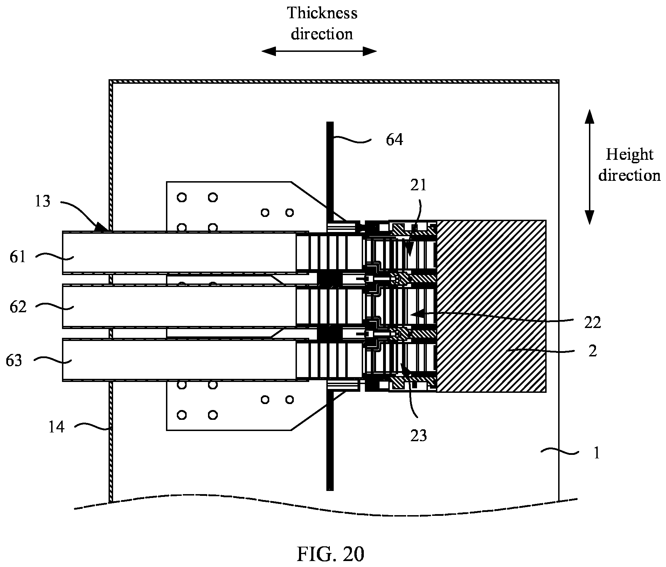

In some examples, the through hole 13 is located on the backplane 14 of the cabinet body 1. FIG. 20 shows an example of a structure of another through hole 13. In this example, the pipes 6 (for example, the first pipe 61, the second pipe 62, and the third pipe 63) may be straight pipes. The first pipe 61, the second pipe 62, and the third pipe 63 may all extend in the thickness direction of the cabinet body 1, and extend out of the cabinet body 1 through through holes 13. The pipe 6 extends in the thickness direction of the cabinet body 1, and the pipe 6 extends out of the backplane 14 of the cabinet body 1, thereby reducing a possibility that dust falls into the pipe 6 from a discharge outlet of the pipe 6.

In some other examples, when the pipes 6 (for example, the first pipe 61, the second pipe 62, and the third pipe 63) extend in the width direction of the cabinet body 1, the through hole 13 may be provided on a side plate of the cabinet body 1.

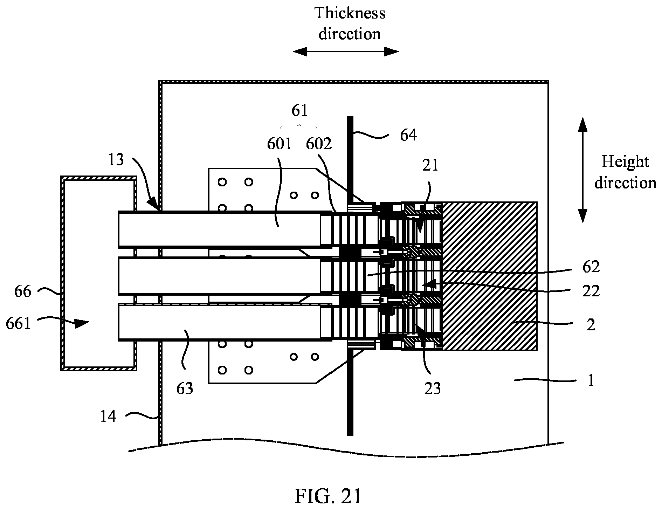

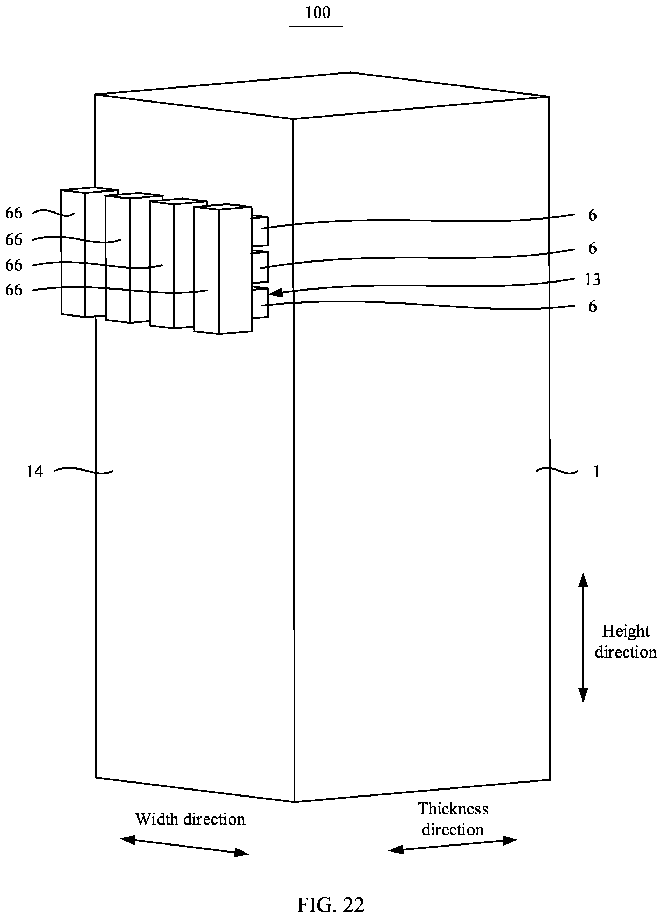

In some examples, the power cabinet 100 may further include a collector 66 communicating with the pipe 6. There is an accommodation cavity 661 in the collector 66. FIG. 21 shows an example of a structure of the collector 66. An accommodation cavity 661 of one collector 66 may communicate with one pipe 6, and one collector 66 may alternatively communicate with the plurality of pipes 6. For example, in an example in which the circuit breaker 2 is the multiphase circuit breaker, the plurality of pipes 6 (for example, the first pipe 61, the second pipe 62, and the third pipe 63 in FIG. 21) communicating with one circuit breaker 2 all communicate with a same collector 66. When a plurality of circuit breakers 2 are disposed, a plurality of collectors 66 may also be disposed. For example, FIG. 22 shows an example of another power cabinet 100. In this example, a quantity of collectors 66 is the same as a quantity of circuit breakers 2. One or more pipes 6 communicating with each circuit breaker 2 communicate with a collector 66 corresponding to the circuit breaker 2. In another example, pipes 6 of a plurality of circuit breakers 2 may communicate with a same collector 66, that is, one power cabinet 100 may include only one collector 66.

In an example in which the power cabinet 100 includes the collector 66, when the pipe 6 extends out of the cabinet body 1, the collector 66 may be located outside the cabinet body 1; or when the pipe 6 does not extend out of the cabinet body 1, the collector 66 may be located in the cabinet body 1.

Through disposition of the collector 66, a possibility that gas discharged by the circuit breaker 2 is directly discharged outside the cabinet body 1 or inside the cabinet body 1 may be reduced. In addition, the accommodation cavity 661 of the collector 66 may be filled with at least one of an asbestos material (for example, an asbestos mesh), foam copper, or a steel wire mesh, to absorb and filter impurities entering the collector 66.

In another example, the pipe 6 may alternatively be in another shape, for example, a curved shape, a snake shape, a "U" shape, or the like.

The pipe 6 may be an integrally formed pipe, or may be a split pipe, for example, the pipe 6 shown in FIG. 21. The pipe 6 includes two parts (separable) sleeved with each other. The first pipe 61 is used as an example. The pipe 6 (the first pipe 61) includes a first part 601 and a second part 602. The second part 602 is fastened on the mounting plate 64, and the first part 601 is sleeved outside the second part 602, to implement assembly of the split pipe 6. In another example, the second part 602 may alternatively be sleeved outside the first part 601.

In an example in which a plurality of circuit breakers 2 are disposed, each circuit breaker 2 may be equipped with a first pipe 61, a second pipe 62, and a third pipe 63, and each circuit breaker 2 may also be equipped with structures such as a mounting plate 64 and a spacer 65, that is, a plurality of or a plurality of groups of structures in FIG. 7 may be disposed. Details are not described in this application.

In another example, only one arc spray vent 20 may be provided on each circuit breaker 2, one pipe 61 communicates with the arc spray vent 20, the pipe 6 may be fastened in the cabinet body 1, and the mounting plate 64 is not disposed. Alternatively, the mounting plate 64 is disposed, and the pipe 6 is fastened on the mounting plate 64.

In another example, the mounting plate 64 may alternatively not be disposed, and the first pipe 61, the second pipe 62, and the third pipe 63 are fastened in the cabinet body 1 by using a support.

In another example, each circuit breaker 2 may have a plurality of arc spray vents 20, and a plurality of arc spray vents 20 on one circuit breaker 2 communicate with each other through one pipe 6.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power cabinet, comprising a cabinet body, a circuit breaker, and a plurality of busbars, wherein the plurality of busbars are fastened in the cabinet body, the circuit breaker is mounted in the cabinet body and electrically connected to the plurality of busbars, and the circuit breaker has at least one arc spray vent facing the plurality of busbars; and
the power cabinet further comprises at least one pipe, the pipe is fastened in the cabinet body, the pipe is located on a side that is of the circuit breaker and that faces the plurality of busbars, and the pipe communicates with the arc spray vent.

2. The power cabinet according to claim 1, wherein the plurality of busbars are located on a side that is of the circuit breaker and that faces a backplane of the cabinet body, and the pipe and the arc spray vent that communicate with each other are located between two busbars that are in the plurality of busbars and that are distributed in a width direction of the cabinet body.

3. The power cabinet according to claim 1 or 2, wherein the cabinet body has a through hole, and the pipe extends out of the cabinet body through the through hole.

4. The power cabinet according to claim 3, wherein the through hole is located on the backplane of the cabinet body, and the pipe extends in a thickness direction of the cabinet body and extends out from the through hole.

5. The power cabinet according to claim 3, wherein the through hole is located at the top of the cabinet body, the pipe is bent and comprises a part extending in a thickness direction of the cabinet body and a part extending in a height direction of the cabinet body, the part that is of the pipe and that extends in the thickness direction of the cabinet body communicates with the arc spray vent, and the part that is of the pipe and that extends in the height direction of the cabinet body extends to above the cabinet body from the through hole.

6. The power cabinet according to any one of claims 1 to 5, wherein the power cabinet further comprises a collector with an accommodation cavity, one end of the pipe communicates with the arc spray vent, and the other end communicates with the accommodation cavity of the collector.

7. The power cabinet according to any one of claims 1 to 6, wherein one of the pipe and the circuit breaker has a protruding rib, the other has a groove fitting with the protruding rib, and the protruding rib is inserted into the groove.

8. The power cabinet according to claim 7, wherein the protruding rib is an annular protruding rib, the groove is an annular groove, and both the protruding rib and the groove surround the arc spray vent.

9. The power cabinet according to any one of claims 1 to 8, wherein the power cabinet further comprises a filter screen with a plurality of air holes, the filter screen is fastened in the pipe, and the filter screen is configured to filter gas flowing through the pipe.

10. The power cabinet according to any one of claims 1 to 9, wherein the power cabinet further comprises a mounting plate, the mounting plate is fastened in the cabinet body, the mounting plate and the circuit breaker are arranged in the thickness direction of the cabinet body, the arc spray vent of the circuit breaker faces the mounting plate, the pipe is fastened on the mounting plate, the circuit breaker further has a plurality of sockets facing the mounting plate, and the plurality of busbars all pass through the mounting plate and are respectively inserted into the corresponding sockets.

11. The power cabinet according to claim 10, wherein the plurality of busbars are fastened on the mounting plate.

12. The power cabinet according to claim 10 or 11, wherein the circuit breaker is a multiphase circuit breaker and is configured to break multiphase electricity, the circuit breaker has a plurality of arc spray vents, gas generated when the circuit breaker breaks currents of different phases is sprayed from the corresponding arc spray vents, a plurality of pipes are provided and fastened on the mounting plate, and each pipe correspondingly communicates with one arc spray vent.

13. The power cabinet according to claim 12, wherein the power cabinet further comprises a plurality of spacers, the plurality of spacers are fastened on a plate surface of the mounting plate, and a material of the mounting plate and a material of the spacer are both insulation materials; and
the plurality of busbars comprise two first busbars arranged in the width direction of the cabinet body and two second busbars arranged in the width direction of the cabinet body, the plurality of arc spray vents comprise a first arc spray vent and a second arc spray vent that are arranged in the height direction of the cabinet body, the first arc spray vent is located between the two first busbars, the second arc spray vent is located between the two second busbars, and at least one spacer is disposed between the first busbar and the second busbar that are adjacent in the height direction of the cabinet body.

14. The power cabinet according to claim 13, wherein the power cabinet further comprises a dividing bar, the dividing bar is fastened on a side that is of the circuit breaker and that faces the mounting plate, and protrudes outward, the dividing bar is located between the first arc spray vent and the second arc spray vent, the dividing bar extends in the width direction of the cabinet body, the two first busbars are located on a side that is of the dividing bar and that faces the first arc spray vent, and the two second busbars are located on a side that is of the dividing bar and that faces the second arc spray vent.

15. The power cabinet according to claim 14, wherein the circuit breaker has a mounting groove, a part of the dividing bar is located in the mounting groove, the other part protrudes out of the mounting groove, and the mounting groove limits movement of the dividing bar toward the mounting plate; and
at least one of two side walls that are of the circuit breaker and that are arranged in an extension direction of the mounting groove has a plug-in port, the plug-in port communicates with the mounting groove, and the plug-in port is used for inserting the dividing bar into the mounting groove or removing the dividing bar from the mounting groove.

16. The power cabinet according to any one of claims 10 to 15, wherein the power cabinet further comprises at least one terminal group for signal transmission, each terminal group comprises two signal terminals for insertion fitting, one of the two signal terminals in each terminal group is fastened on the mounting plate, and the other is fastened on the circuit breaker.

17. The power cabinet according to any one of claims 1 to 16, wherein the power cabinet further comprises a mounting base, the mounting base is fastened in the cabinet body, the mounting base has a mounting cavity and a mounting opening for the circuit breaker to enter the mounting cavity, a wall surface that is of the mounting base and that encloses the mounting cavity has a sliding groove, an end of the sliding groove extends to the mounting opening, a slider is disposed on the circuit breaker, the slider is located in the sliding groove, and the sliding groove is used for sliding of the slider.
